# EUROPEAN PATENT SPECIFICATION

(11) **EP 2 378 964 B1**
(45) Date of publication and mention of the grant of the patent: **21.08.2019**
(21) Application number: 09835812.0
(22) Date of filing: 22.12.2009
(51) Int. Cl.: G06T 7/00, G06T 7/41

(54) **THERAPEUTIC SUCCESS PREDICTION FOR ATRIAL FIBRILLATION**
PROGNOSE FÜR DEN THERAPEUTISCHEN ERFOLG BEI VORHOFFLIMMERN
PRÉDICTION DE RÉUSSITE THÉRAPEUTIQUE POUR FIBRILLATION AURICULAIRE

(30) Priority: 24.12.2008 US 344164
(43) Date of publication of application: 26.10.2011
(73) Proprietor: University of Utah Research Foundation, Salt Lake City, UT 84108 (US)
(72) Inventor: MARROUCHE, Nassir, F., Salt Lake City UT 84108 (US); MACLEOD, Rob, Salt Lake City UT 84108 (US); KHOLMOVSKI, Eugene, Salt Lake City UT 84108 (US); MCGANN, Christopher, Salt Lake City UT 84108 (US); BLAUER, Joshua, Salt Lake City UT 84108 (US); BADGER, Troy, Salt Lake City UT 84108 (US); OAKES, Robert, Sillman, Salt Lake City UT 84108 (US); BURGON, Nathan, Salt Lake City UT 84108 (US)
(74) Representative: Dunlop, Hugh Christopher
(86) International application number: PCT/US2009/069330
(87) International publication number: WO 2010/075468

(56) References cited:
- MCGANN C J ET AL: "New Magnetic Resonance Imaging-Based Method for Defining the Extent of Left Atrial Wall Injury After the Ablation of Atrial Fibrillation", JOURNAL OF THE AMERICAN COLLEGE OF CARDIOLOGY, ELSEVIER, NEW YORK, NY, US, vol. 52, no. 15, 7 October 2008 (2008-10-07), pages 1263-1271, XP025473527, ISSN: 0735-1097, DOI: 10.1016/J.JACC.2008.05.062 [retrieved on 2008-09-30]
- SHIN, S. H. ET AL.: 'Left Atrial Volume Is a Predictor of Atrial Fibrillation Recurrence After Catheter Ablation' JOURNAL OF THE AMERICAN SOCIETY OF ECHOCARDIOGRAPHY vol. 21, no. ISSUE, 2008, pages 697 - 702, XP022776378
- BRIAN OLSHANSKY ET AL.: ''Fibrillation Recurrence or Stroke?: Results From the Atrial Fibrillation Are Transthoracic Echocardiographic Parameters Associate With Atrial Follow-Up Investigation of Rhythm Management (AFFIRM)' STUDY JOURNAL OF THE AMERICAN COLLEGE OF CARDIOLOGY vol. 45, no. 12, 2005, pages 2026 - 2033, XP008141001
- RATIKA PARKASH ET AL.: 'The association of left atrial size and occurrence of atrial fibrillation:A prospective cohort study from the Canadian Registry of a Atrial Fibrillation' AMERICAN HEART JOURNAL vol. 148, 2004, pages 649 - 654, XP004581477
- ANTONIO BERRUEZO ET AL.: 'Pre-procedural predictors of atrial fibrillation recurrence after circumferential pulmonary vein ablation' EUROPEAN HEART JOURNAL vol. 28, 2007, pages 836 - 841, XP008140316

## Description

### Field of the Inventions

Embodiments of the inventions relate to cardiac imaging and atrial fibrillation therapy.

### Background of the Inventions

Atrial fibrillation (AF) is a cardiac arrhythmia involving an irregular, and often ineffective, quiver-type beating of the heart's two upper chambers (the atria). In certain instances of AF, blood may not be pumped completely out of the atria, and may eventually clot. If a blood clot in the atria leaves the heart and becomes lodged in a brain artery, a stroke can result.

AF affects more than 2.2 million people in the United States, and the prevalence of AF increases with age. Approximately 4% of people over age 60 have experienced an episode of AF. AF can occur in healthy people, but more often is associated with an underlying condition such as coronary heart disease, hypertension, valvular heart disease, and rheumatic heart disease. AF may also develop after cardiac or pulmonary surgery.

Treatments for AF include medications to decrease blood clotting, medications to slow down rapid heart rate, electric shock to restore normal heart rhythm (cardioversion), pulmonary vein antrum isolation (PVAI), and use of pacemakers to regulate heart beat rhythm.

Normally, a mammalian heart beat comprises phases called "diastole," in which the heart relaxes and fills with blood, and "systole," in which the heart contracts and pumps out the blood. An electrical wavefront typically starts in the "sinoatrial" (SA) node of the atrium, spreads over the two atria, and leads to contraction of cardiac muscle. When such an electrical wavefront reaches the "atrioventricular" (AV) node, the wavefront is delayed, which allows the atria to finish contracting, moving blood from the atria to the ventricles.

From the AV node, the electrical wavefront spreads through the His-Purkinje system, which comprises fibers that form a specialized conduction system that quickly propagates the wavefront throughout the ventricles, resulting in ventricular contraction. Contraction of the ventricles pumps blood into the lungs and body. At the end of contracting, the ventricles relax and the process repeats.

An electrocardiogram (ECG) can be used to assess heart rhythm and disturbances therein by measuring electrical activities of the heart that are detectable at surfaces of the body. An ECG typically comprises a repeated pattern of three measured electrical waveform components of a heartbeat: the "P wave," the "Q wave," and the "T wave." The P wave results from atrial depolarization, i.e., the wavefront generated as electrical impulses from the SA node spread throughout the atrial musculature. The Q wave occurs at the beginning of a "QRS complex," but may not always be present. The T wave involves electrical recovery of the ventricles.

The P wave precedes the QRS complex, which occurs as a result of ventricular depolarization. The QRS complex, a large waveform, typically comprises three waves, the "Q wave," the "R wave," and the "S wave," but not every QRS complex contains a Q wave, an R wave, and an S wave. By convention, any combination of these waves can be referred to as a QRS complex. The Q wave represents depolarization of the interventricular septum. The R wave is typically the first positive deflection, and the S wave is the negative deflection that follows the R wave. The time interval between two consecutive beats, the so-called "beat interval," is often measured from the R-wave of one beat to the R-wave of the following beat, and the time between two consecutive R waves is called the RR interval. A "PR interval" comprises the time it takes an electrical impulse to travel from the atria through the AV node, bundle of His, and bundle branches to the Purkinje's fibers; and the PR interval extends from the beginning of the P wave to the beginning of the QRS complex.

The QRS complex is usually the dominant feature of an ECG. The P wave is much smaller than the QRS complex because the atria generate less electrical activity than the larger ventricles. Other components of an ECG include the "Q-T Interval," which represents the time necessary for ventricular depolarization and repolarization, and extends from the beginning of the QRS complex to the end of a T wave. By analyzing patterns of an ECG, insights into the condition of the heart can be obtained.

In an ECG from a heart with normal rhythm, large QRS complexes are separated by a fairly flat signal, except for a small upright bump (the P wave) about 120-200 ms before the QRS complex. A P wave is conducted when atrial electrical activity conducts through the AV node, causing electrical activation of the ventricles and the QRS complex. At most one P wave in an RR interval is conducted, and any other P waves in the same RR interval are non-conducted. A P wave is non-conducted when it fails to lead to a QRS complex. Non-conducted P waves can result from a premature P wave, a condition called AV block, and other reasons. P waves non-conducted as a result of AV block are said to be blocked P waves.

In atrial flutter, the atrial rhythm can increase to approximately 250-350 beats per minute. Increased atrial rhythms are sometimes detected as continuous waves in an ECG, with several waves appearing in a continuous, connected pattern in each RR interval: a pattern substantially different from the normal pattern of a single P wave in each RR interval. Such waves of continuous, cyclic atrial activity are called flutter waves or F-waves, and may form a sawtooth pattern in an ECG. During atrial flutter, the ventricular response can become locked into a regular pattern with the atrial activity, so that, for instance, every third flutter wave results in a QRS complex while the other flutter waves are non-conducted. In other cases, conduction of the flutter waves can be more random, resulting in an irregular ventricular rhythm.

Rapid atrial rhythm rates, generally over 350-400 beats per minute, are called AF. Such atrial activity can be visible in the RR interval as continuous, cyclic activity referred to as "f waves," or coarse AF. Typically, the f waves are cyclic, but not as organized or consistent in shape as the F waves of atrial flutter. When viewed in two ECG channels, the cyclic activity of f waves may be seen to alternate back and forth between channels in what appears to be modulated electrical activity. At other times, AF may be present with no obvious cyclic activity visible in an ECG, but with low amplitude disorganized "noise" in the baseline. In other cases, there may be total absence of atrial activity, suggesting that the AF has become disorganized.

### Summary of the Inventions

Certain embodiments provide a method of assessing an outcome of an ablative atrial fibrillation (AF) treatment modality administered to a patient, the method comprising: determining, from left atrium (LA) tissue image data of a subject patient that has undergone a first ablative AF treatment with the modality, at least one of: (i) a level of a parameter that is positively proportional or negatively proportional to an amount of ablated tissue in a wall of the LA of the subject patient; and (ii) a spatial distribution, in the LA wall, of a variable indicative of ablated LA tissue; and outputting, to an output device, a machine-readable indicator of at least one of: (i) a comparison between the determined level and a threshold level of the parameter; wherein the threshold level is derived from LA tissue image data of at least one other patient who did not experience an AF recurrence for a significant period of time after treatment with the AF treatment modality; wherein, when the level of the parameter is positively proportional to the amount of ablated tissue, levels of the parameter equal to or less than the first threshold level are indicative of a significant risk of AF recurrence; wherein, when the level of the parameter is negatively proportional to the amount of ablated tissue, levels of the parameter equal to greater than the first threshold level are indicative of a significant risk of AF recurrence; and (ii) a map of the spatial distribution, wherein an indication, from the map, of a lack of electrical isolation of one or more pulmonary veins of the subject patient indicates a significant risk of AF recurrence.

In certain embodiments, the output device comprises at least one of a microprocessor, a computer, a storage medium, a server, a paper, a graphical user interface, a computer display, an LCD, an LED, and a television display. In certain embodiments, the subject patient underwent the ablative AF treatment modality less than about six months and more than about one day prior to the time at which the LA data was acquired.

In certain embodiments, the significant period of time comprises at least two months. In certain embodiments, the significant period of time comprises at least three months.

In certain embodiments, a method comprises, based on the indicator, administering a second ablative AF treatment to the subject patient.

In certain embodiments, a method comprises determining, from tissue image data of the subject patient, an amount of esophageal damage in the subject patient after the first ablative AF treatment.

In certain embodiments, the ablation comprises at least one of radiofrequency ablation, thermal ablation, laser ablation, surgical ablation, and cryoablation. In certain embodiments, the ablation comprises pulmonary vein antrum isolation. In certain embodiments, the level of the parameter comprises a proportion of ablated LA wall tissue relative to a total amount of the LA wall tissue.

In certain embodiments, the proportion of ablated LA wall tissue relative to a total amount of LA wall tissue comprises a ratio of (i) an imaged volume of ablated LA wall tissue to (ii) an imaged total volume of LA wall tissue. In certain embodiments, the proportion is between about 1% and about 20%, and wherein the significant risk comprises a risk of AF recurrence of between about 15% and about 80% risk.

In certain embodiments, the AF treatment modality comprises administration of a therapeutic substance. In certain embodiments, the therapeutic substance comprises an antiarrhythmic medication.

In certain embodiments, a method comprises acquiring the image data by detecting a signal of an agent substantially localized at the ablated LA tissue. In certain embodiments, the agent comprises a magnetic resonance contrast agent, and wherein the detecting comprises performing magnetic resonance imaging. In certain embodiments, the magnetic resonance imaging comprises delayed enhancement magnetic resonance imaging (DE-MRI). In certain embodiments, the agent comprises gadolinium.

In certain embodiments, a method comprises localizing the agent to the ablated LA tissue by exposing the LA tissue to an antibody or antibody component, coupled to the agent, that binds an epitope present in the ablated LA tissue and not present in healthy LA tissue, such that a substantial amount of the agent present at the LA tissue, at the time of image data acquisition, is bound to the ablated LA tissues through antibody-epitope binding. In certain embodiments, the epitope comprises at least one of collagen, fibrinogen, fibrin, and fibronectin. In certain embodiments, the antibody or antibody component comprises at least one of a monoclonal antibody, a polyclonal antibody, a Fab peptide, and a single chain variable region peptide.

In certain embodiments, the agent comprises a radioisotope, and wherein the detecting the signal comprises performing at least one of positron emission tomography (PET), radionuclide scanning, and single photon emission computed tomography (SPECT). In certain embodiments, the agent comprises an isotope of at least one of P, I, Tl, Tc, and H. In certain embodiments, the agent comprises a radiopaque marker, and wherein the detecting comprises performing at least one of radiography and fluoroscopy.

Certain embodiments provide a computer-implemented system for assessing a patient's risk for recurrent atrial fibrillation (AF) following treatment with an AF treatment modality, the system comprising: a complete at the a processing module that determines, from left atrium (LA) tissue image data of a subject patient that has undergone a first ablative AF treatment with the modality, at least one of: (i) a level of a parameter that is positively proportional or negatively proportional to an amount of ablated tissue in a wall of the LA of the subject patient; and (ii) a spatial distribution, in the LA wall, of a variable indicative of ablated LA tissue; and an output module, in communication with the processing module, that outputs a machine-readable indicator of at least one of: (i) a comparison between the determined level and a threshold level of the parameter; wherein the threshold level is derived from LA tissue image data of at least one other patient who did not experience an AF recurrence for a significant period of time after treatment with the AF treatment modality; wherein, when the level of the parameter is positively proportional to the amount of ablated tissue, levels of the parameter equal to or less than the first threshold level are indicative of a significant risk of AF recurrence; wherein, when the level of the parameter is negatively proportional to the amount of ablated tissue, levels of the parameter equal to greater than the first threshold level are indicative of a significant risk of AF recurrence; and (ii) a map of the spatial distribution, wherein an indication, from the map, of a lack of electrical isolation of one or more pulmonary veins of the subject patient indicates a significant risk of AF recurrence.

In certain embodiments, the machine-readable indicator is readable by at least one of a microprocessor, a computer, a storage medium, a server, a paper, a graphical user interface, a computer display, an LCD, an LED, and a television display.

In certain embodiments, the output module outputs the machine-readable indicator to a receiving device that reads the machine-readable indicator. In certain embodiments, the receiving device comprises at least one of a microprocessor, a computer, a storage medium, a server, a paper, a graphical user interface, a computer display, an LCD, an LED, and a television display.

In certain embodiments, a system comprises the receiving device.

In certain embodiments, a system comprises an imaging module that acquires the LA tissue image data by imaging the patient.

Certain embodiments provide a method of assessing a patient's risk for recurrent atrial fibrillation (AF) following treatment with an AF treatment modality, the method comprising: determining, from left atrium (LA) tissue image data of a patient, a level of a parameter that is positively proportional or negatively proportional to an amount of unhealthy tissue in a wall of the LA of the patient; and outputting, to an output device, a machine-readable indicator of a comparison between (i) the determined level and (ii) a first threshold level of the parameter, the first threshold level derived from LA tissue image data of at least one other patient, who experienced an AF recurrence after treatment with the AF treatment modality; wherein, when the level of the parameter is positively proportional to the amount of unhealthy tissue, levels of the parameter equal to or greater than the first threshold level are indicative of a significant risk of AF recurrence after treatment with the AF treatment modality; wherein, when the level of the parameter is negatively proportional to the amount of unhealthy tissue, levels of the parameter equal to less than the first threshold level are indicative of a significant risk of AF recurrence after treatment with the AF treatment modality.

In certain embodiments, the output device comprises at least one of a microprocessor, a computer, a storage medium, a server, a paper, a graphical user interface, a computer display, an LCD, an LED, and a television display. In certain embodiments, the unhealthy tissue present in the LA wall comprises at least one of a fibrotic tissue, a necrotic tissue, a tissue comprising apoptotic cells, a scar tissue, a tissue having impaired electrical conduction, and an aberrantly electrically remodeled tissue.

In certain embodiments, the AF treatment modality comprises tissue ablation. In certain embodiments, the ablation comprises at least one of radiofrequency ablation, thermal ablation, laser ablation, surgical ablation, and cryoablation. In certain embodiments, the ablation comprises pulmonary vein antrum isolation.

In certain embodiments, the level of the parameter comprises a proportion of fibrotic LA wall tissue relative to a total amount of the LA wall tissue. In certain embodiments, the proportion of fibrotic LA wall tissue relative to a total amount of LA wall tissue comprises a ratio of (i) an imaged volume of fibrotic LA wall tissue to (ii) an imaged total volume of LA wall tissue. In certain embodiments, the proportion is between about 10% and about 20%, and the significant risk comprises a risk of recurrent AF of between about 15% and about 45% risk. In certain embodiments, the proportion is between about 30% and about 40%, and the significant risk comprises a risk of recurrent AF of between about 40% and about 75%.

In certain embodiments, the AF treatment modality comprises administration of a therapeutic substance. In certain embodiments, the therapeutic substance comprises an antiarrhythmic medication.

In certain embodiments, the tissue image data of the patient is acquired before the patient receives treatment with the AF treatment modality. In certain embodiments, the determining occurs before the patient receives treatment with the AF treatment modality.

In certain embodiments, the method comprises acquiring the image data by detecting a signal of an agent substantially localized at the unhealthy LA tissue. In certain embodiments, the agent comprises a magnetic resonance contrast agent, and wherein the detecting comprises performing magnetic resonance imaging. In certain embodiments, the magnetic resonance imaging comprises delayed enhancement magnetic resonance imaging (DE-MRI). In certain embodiments, the agent comprises gadolinium.

In certain embodiments, a method further comprises localizing the agent to the unhealthy LA tissue by exposing the LA tissue to an antibody or antibody component, coupled to the agent, that binds an epitope present in the unhealthy LA tissue and not present in healthy LA tissue, such that a substantial amount of the agent present at the LA tissue, at the time of image data acquisition, is bound to the unhealthy LA tissues through antibody-epitope binding. In certain embodiments, the epitope comprises at least one of collagen, fibrinogen, fibrin, and fibronectin. In certain embodiments, the antibody or antibody component comprises at least one of a monoclonal antibody, a polyclonal antibody, a Fab peptide, and a single chain variable region peptide.

In certain embodiments, the agent comprises a radioisotope, and wherein the detecting the signal comprises performing at least one of positron emission tomography (PET), radionuclide scanning, and single photon emission computed tomography (SPECT). Certain embodiments, the agent comprises an isotope of at least one of P, I, Tl, Tc, and H. In certain embodiments, the agent comprises a radiopaque marker, and wherein the detecting comprises performing at least one of radiography and fluoroscopy.

Certain embodiments provide a computer-implemented system for assessing a patient's risk for recurrent atrial fibrillation (AF) following treatment with an AF treatment modality, the system comprising: a processing module that determines, from left atrium (LA) tissue image data of a patient, a level of a parameter that is positively proportional or negatively proportional to an amount of unhealthy tissue in a wall of the LA of the patient; and an output module, in communication with the processing module, that outputs a machine-readable indicator of a comparison between (i) the determined level and (ii) a first threshold level of the parameter, the first threshold level derived from LA tissue image data of at least one other patient, who experienced an AF recurrence after treatment with the AF treatment modality; wherein, when the level of the parameter is positively proportional to the amount of unhealthy tissue, levels of the parameter equal to or greater than the first threshold level are indicative of a significant risk of AF recurrence after treatment with the AF treatment modality; wherein, when the level of the parameter is negatively proportional to the amount of unhealthy tissue, levels of the parameter equal to less than the first threshold level are indicative of a significant risk of AF recurrence after treatment with the AF treatment modality.

In certain embodiments, the machine-readable indicator is readable by at least one of a microprocessor, a computer, a storage medium, a server, a paper, a graphical user interface, a computer display, an LCD, an LED, and a television display.

In certain embodiments, the output module outputs the machine-readable indicator to a receiving device that reads the machine-readable indicator. In certain embodiments, the receiving device comprises at least one of a microprocessor, a computer, a storage medium, a server, a paper, a graphical user interface, a computer display, an LCD, an LED, and a television display. In certain embodiments, a system comprises the receiving device.

In certain embodiments, the system comprises an imaging module that acquires the LA tissue image data by imaging the patient. In certain embodiments, the imaging module comprises a magnetic resonance imaging machine.

Certain embodiments of the invention provide methods of assessing a patient's risk for atrial fibrillation (AF) recurrence after receiving treatment with an AF treatment modality, the method comprising: determining, from left atrium (LA) tissue image data of a patient, a level of a parameter that is positively proportional to an amount of unhealthy tissue in a wall of the LA of the patient; and outputting, to an output device, an indicator of a comparison between (i) the determined level and (ii) a first threshold level of the parameter, the first threshold level derived from LA tissue image data of at least one other patient, who experienced an AF recurrence after treatment with the AF treatment modality; wherein levels of the parameter equal to or greater than the first threshold level are indicative of a significant risk of AF recurrence after treatment with the AF treatment modality.

Certain embodiments of the invention provide methods of assessing a patient's risk for atrial fibrillation (AF) recurrence after receiving treatment with an AF treatment modality, the method comprising: determining, from left atrium (LA) tissue image data of a patient, a level of a parameter that is negatively proportional to an amount of unhealthy tissue in a wall of the LA of the patient; and outputting, to an output device, an indicator of a comparison between (i) the determined level and (ii) a first threshold level of the parameter, the first threshold level derived from LA tissue image data of at least one other patient, who experienced an AF recurrence after treatment with the AF treatment modality; wherein levels of the parameter equal to or greater than the first threshold level are indicative of a significant risk of AF recurrence after treatment with the AF treatment modality.

In certain embodiments, the output device comprises at least one of a microprocessor, a computer, a storage medium, a server, a paper, a graphical user interface, a computer display, an LCD, an LED, and a television display.

In certain embodiments, the unhealthy tissue present in the LA wall comprises at least one of a fibrotic tissue, a necrotic tissue, a tissue comprising apoptotic cells, a scar tissue, a poorly conductive tissue, and an aberrantly electrically remodeled tissue. In certain embodiments, the AF treatment modality comprises tissue ablation. In certain embodiments, the ablation comprises at least one of radiofrequency ablation, thermal ablation, laser ablation, surgical ablation, and cryoablation. In certain embodiments, the ablation comprises pulmonary vein antrum isolation.

In certain embodiments, the level of the parameter comprises a proportion of fibrotic LA wall tissue relative to a total amount of LA wall tissue. In certain embodiments, the proportion of fibrotic LA wall tissue relative to a total amount of LA wall tissue comprises a ratio of (i) an imaged volume of fibrotic LA wall tissue to (ii) an imaged total volume of LA wall tissue. In certain embodiments, the proportion is between about 10% and about 20%, and the significant risk comprises a risk of recurrent AF of between about 15% and about 45% risk. In certain embodiments, the proportion is between about 30% and about 40%, and the significant risk comprises a risk of recurrent AF of between about 40% and about 75%.

In certain embodiments, the AF treatment modality comprises administration of a therapeutic substance. In certain embodiments, the therapeutic substance comprises an antiarrhythmic medication.

Certain embodiments of methods of assessing a patient's risk for atrial fibrillation (AF) recurrence after receiving treatment with an AF treatment modality comprise acquiring the image data by detecting a signal of an agent substantially localized at the unhealthy LA tissue. In certain embodiments, the agent comprises a magnetic resonance contrast agent, and wherein the detecting comprises performing magnetic resonance imaging. In certain embodiments, the magnetic resonance imaging comprises delayed enhancement magnetic resonance imaging (DE-MRI). In certain embodiments, the agent comprises gadolinium.

Certain embodiments of methods of assessing a patient's risk for atrial fibrillation (AF) recurrence after receiving treatment with an AF treatment modality comprise localizing the agent to the unhealthy LA tissue by exposing the LA tissue to an antibody or antibody component, coupled to the agent, that binds an epitope present in the unhealthy LA tissue and not present in healthy LA tissue, such that a substantial amount of the agent present at the LA tissue, at the time of image data acquisition, is bound to the unhealthy LA tissues through antibody-epitope binding. In certain embodiments, the antibody or antibody component specifically recognizes an epitope present in substantial amounts in unhealthy LA wall tissues and in insubstantial amounts in healthful LA wall tissues. In certain embodiments, the antibody or antibody component specifically recognizes an epitope present in substantial amounts in both healthy and unhealthy LA wall tissue, but not susceptible to being bound by the antibody or antibody component in either healthy LA wall tissue or unhealthy LA wall tissue due to, for instance, steric block effects. In certain embodiments, the epitope comprises at least one of collagen, fibrinogen, fibrin, and fibronectin. In certain embodiments, the antibody or antibody component comprises at least one of a monoclonal antibody, a polyclonal antibody, a Fab peptide, and a single chain variable region peptide. In certain embodiments, the agent comprises a radioisotope, and wherein the detecting the signal comprises performing at least one of positron emission tomography, radionuclide scanning, and single photon emission computed tomography. In certain embodiments, the agent comprises at least one of P³², I¹²³, and H³. In certain embodiments, the agent comprises a radiopaque marker, and the detecting comprises performing at least one of radiography and fluoroscopy.

### Brief Description of the Drawings

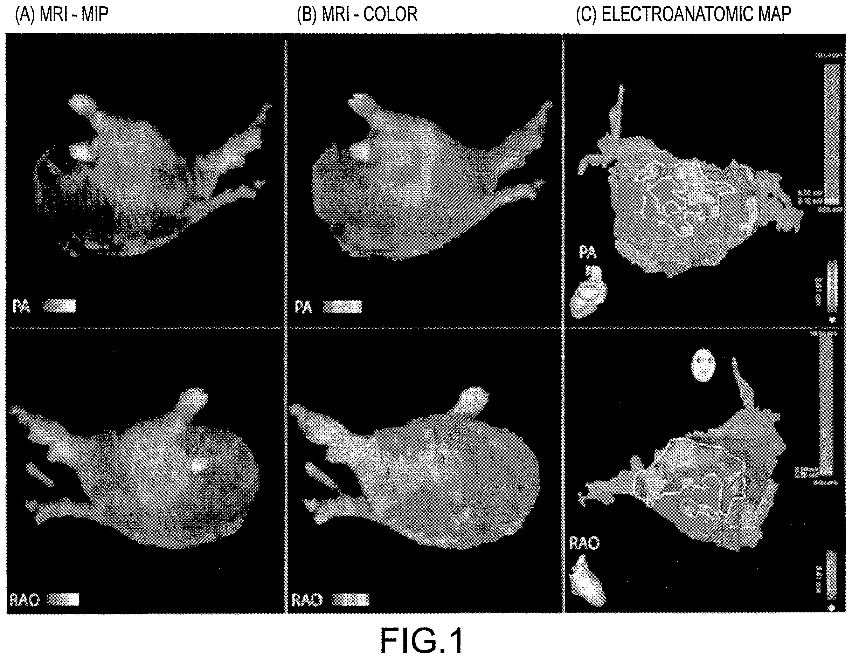

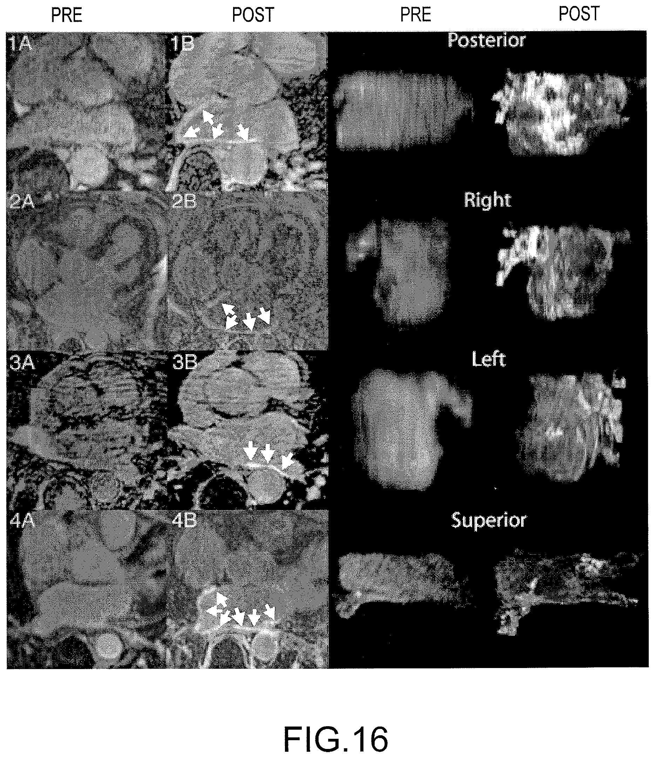

Figure 1 shows a segmented MRI (Figure 1A) that reveals discrete areas of elevated enhancement in the posterior wall and the septal area. Figure 1 also shows a volume rendered color model (Figure 1B) for a patient having AF and for a healthy subject. Figure 1 also shows an electroanatomic map acquired during invasive EP study. Discrete patterns of low voltage (within bounded white lines) were detected in the left posterior wall and the septum in the patient shown (Figure 1C).

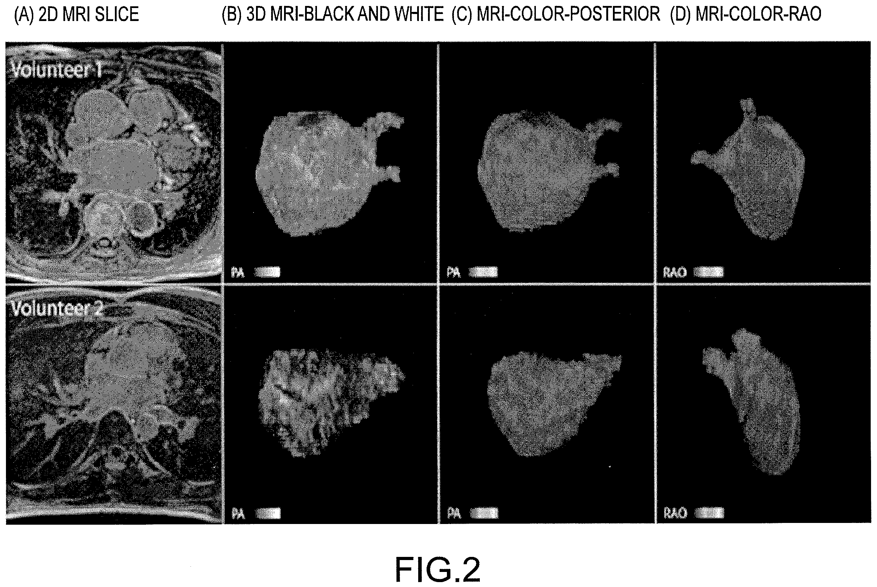

Figure 2 shows DE-MRI models of left atrial tissues in two healthy subjects lacking structural remodeling: Figure 2A shows two dimensional slices from the DE-MRI scanning of the subjects; Figures 2B and 2C show a posterior (PA) view of reconstructed three dimensional models from the DE-MRI scanning; and Figure 2D shows a right anterior oblique (RAO) view of reconstructed three dimensional models which shows the inter-atrial septum and the anterior wall.

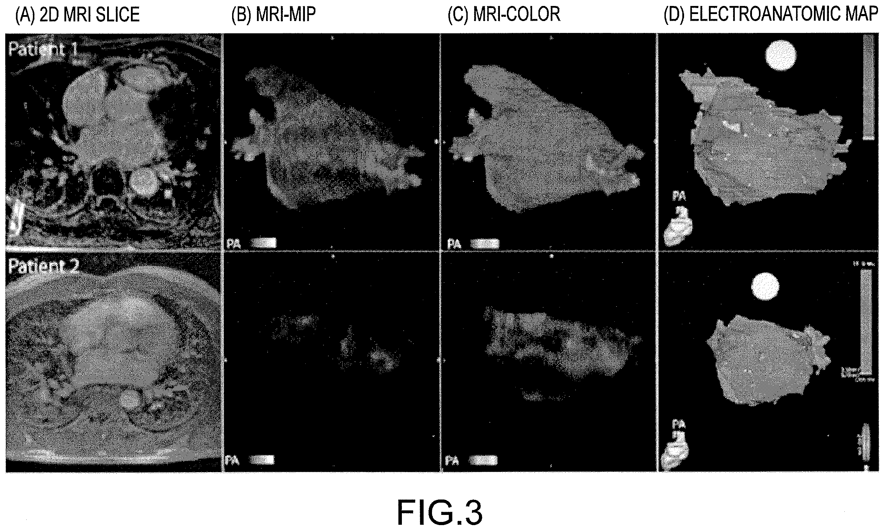

Figure 3 shows three dimensional MRI models and electroanatomical maps of left atrial tissues in two patients having mild structural remodeling. Figure 3A shows two dimensional slices from the DE-MRI scanning. Figure 3B shows segmented DE-MRI models that reveal minimal contrast enhancement. Figure 3C shows color three-dimensional DE-MRI models. Figure 3D shows an electroanatomical map acquired during an invasive EP procedure, and shows electrically normal (purple) and abnormal (colored) left atrial tissue. Abnormally enhanced regions on MRI correlate closely with low voltage areas identified by invasive electroanatomical mapping.

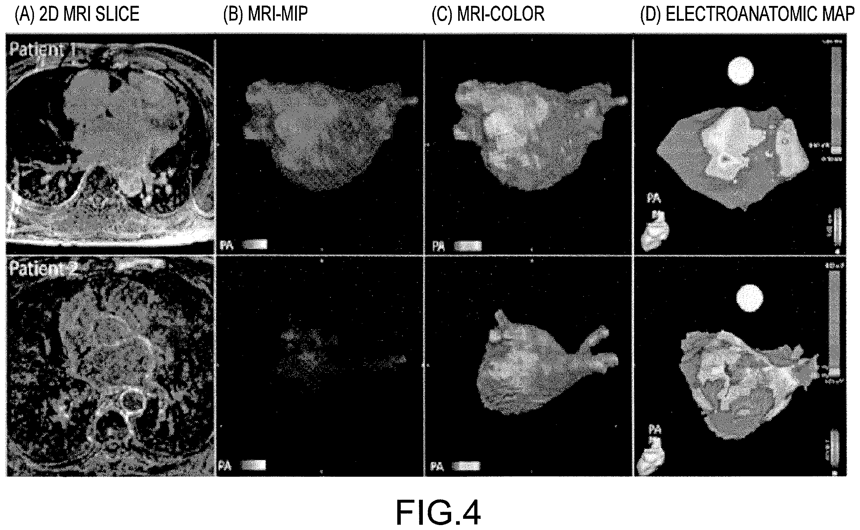

Figure 4 shows DE-MRI models of left atrial tissues in two patients that have moderate structural remodeling in the LA wall tissue. Figure 4A shows a two dimensional slice from the DE-MRI scanning. Figure 4B shows a segmented DE-MRI model illustrating enhancement in portions of the poster LA wall. Figure 4C shows MRI images as color 3D models illustrating large regions of abnormal enhancement (green) in comparison to healthy tissue (blue). Figure 4D shows an electroanatomical map acquired during an invasive EP procedure, and shows large patches of electrically normal (purple) and abnormal tissue (colored). Electrically non-viable (scar) tissue is shown in red. The extent and location of elevated enhancement on MRI correlates closely with low voltage tissue seen on electroanatomical maps.

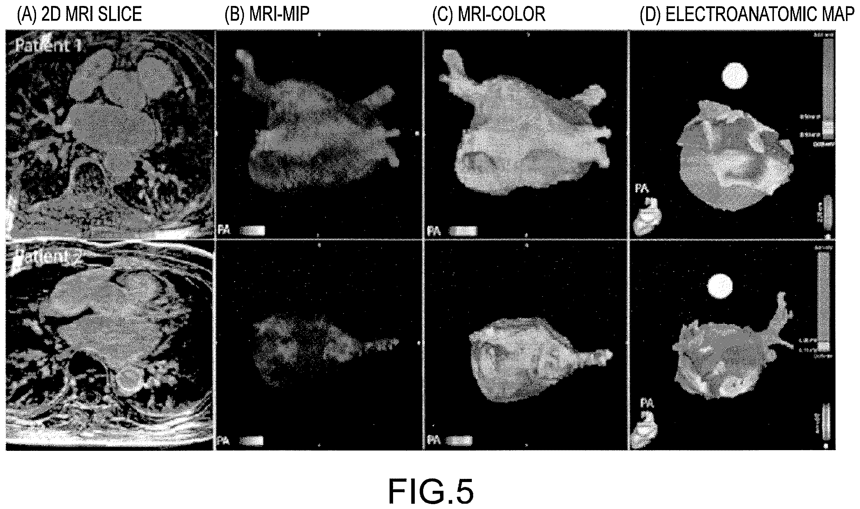

Figure 5 shows three dimensional MRI models of left atrial tissues in two patients that have extensive structural remodeling of left atrial tissue, each of which suffered AF recurrence after PVAI. Figure 5A shows two dimensional slices from the DE-MRI scanning. Figure 5B shows segmented DE-MRI model illustrating large amounts of enhancement in various regions of the LA, including the anterior wall, posterior wall and septum. Figure 5C shows color three-dimensional DE-MRI models illustrating abnormally enhanced regions in green. Figure 5D shows electroanatomical illustrating large regions of electrically non-viable tissue (fibrotic scar) in red interspersed with electrically abnormal tissue.

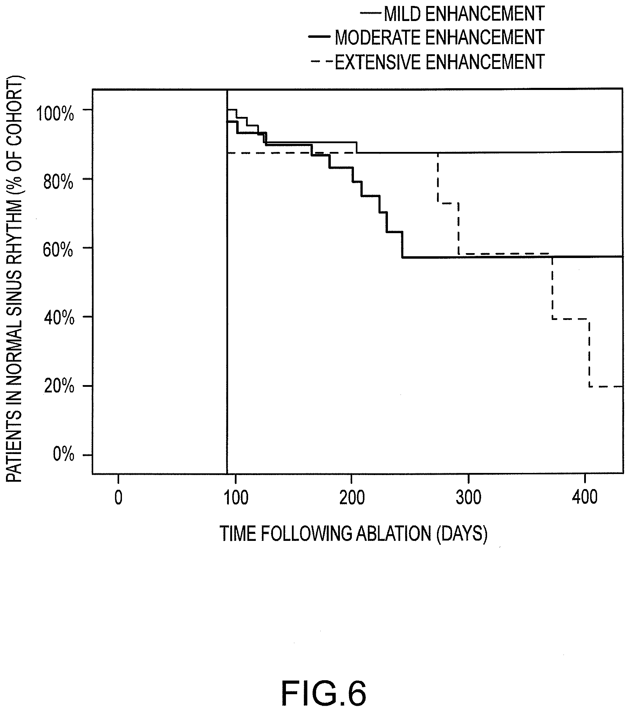

Figure 6 shows the Kaplan-Meier analysis of patients, grouped by the extent of enhancement, in normal sinus rhythm following ablation of the left atrium.

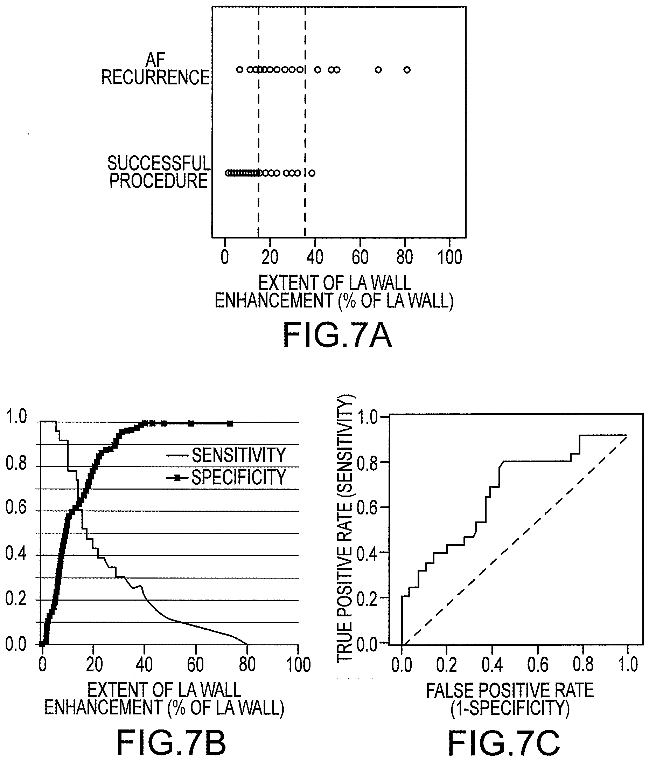

Figure 7A provides a graphical representation of atrial fibrillation recurrence and non-recurrence, after an AF treatment, as a function of the extent of LA wall enhancement. Figure 7B provides a graphical representation of sensitivity and specificity as a function of the extent of LA wall enhancement. Figure 7C provides a graphical representation of sensitivity as a function of specificity.

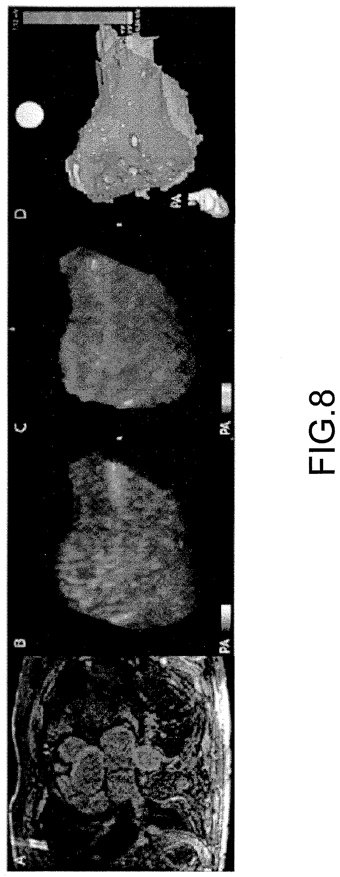

Figure 8 shows an early DE-MRI model having a substantial artifact induced by a respiratory navigator placed on the right hemidiaphragm of the subject. Figure 8A shows a DE-MRI slice from the DE-MRI scanning. Figure 8B shows a maximum intensity projection (MIP) of a segmented DE-MRI slice. Figure 8C shows a three dimensional DE-MRI model. Figure 8D shows an electroanatomical map acquired during an invasive EP procedure. Despite the DE-MRI artifact, there is a relationship between the enhancement illustrated in the DE-MRI model (Figure 8C) and the low voltage tissue illustrated in the electroanatomic map (Figure 8D). The patient shown has minimal enhancement.

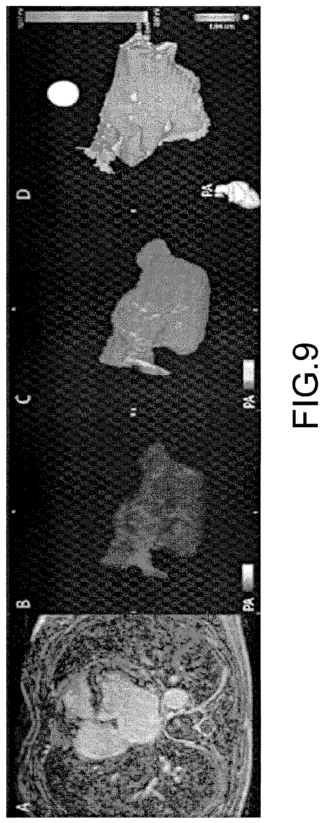

Figure 9 illustrates a DE-MRI model that does not have a navigator induced artifact. Figure 9D shows a DE-MRI slice from the DE-MRI scanning. Figure 9B shows a maximum intensity projection (MIP) of a segmented two DE-MRI slice. Figure 9C shows a three-dimensional DE-MRI model. Figure 9D shows an electroanatomic map acquired during an invasive procedure. The patient shown has minimal enhancement.

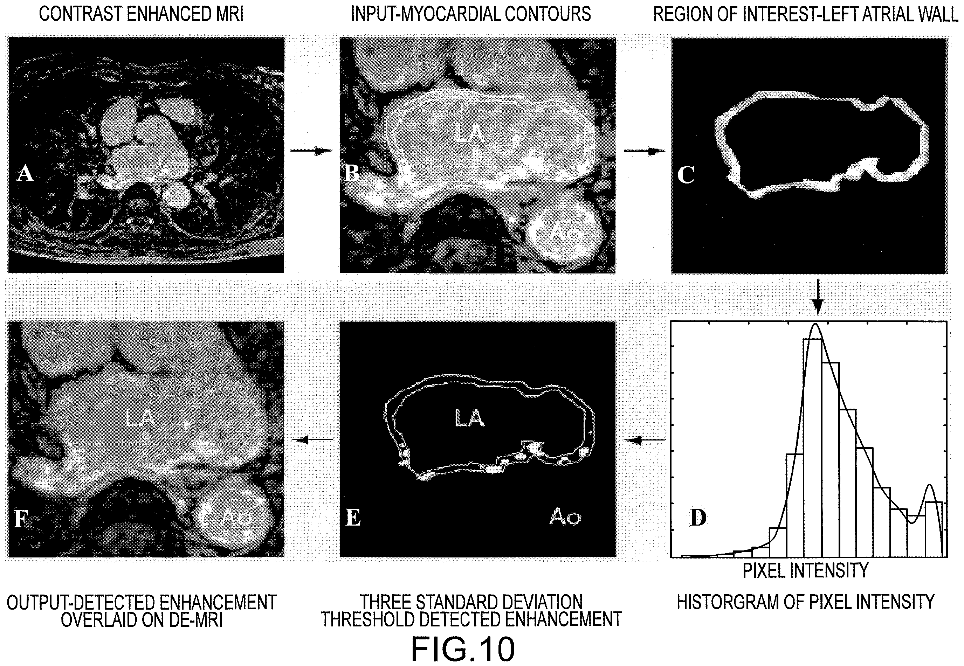

Figure 10 illustrates data flow for a semi-automated algorithm used to detect enhancement of LA wall tissue in a DE-MRI model (Figures 10E and 10F). The input slices from a DE-MRI slice (Figure 10A) were windowed (Figure 10B) and cropped (Figure 10C). The epicardial and endocardial borders were then manually segmented. The algorithm then automatically selected a threshold intensity for pixels likely to correspond to the enhanced/fibrotic tissue of the LA wall by determining the mean value and standard deviation of the lower region of the pixel intensity histogram (Figure 10D). A threshold cutoff was chosen manually at two to four standard deviations above the mean for the lower histogram region.

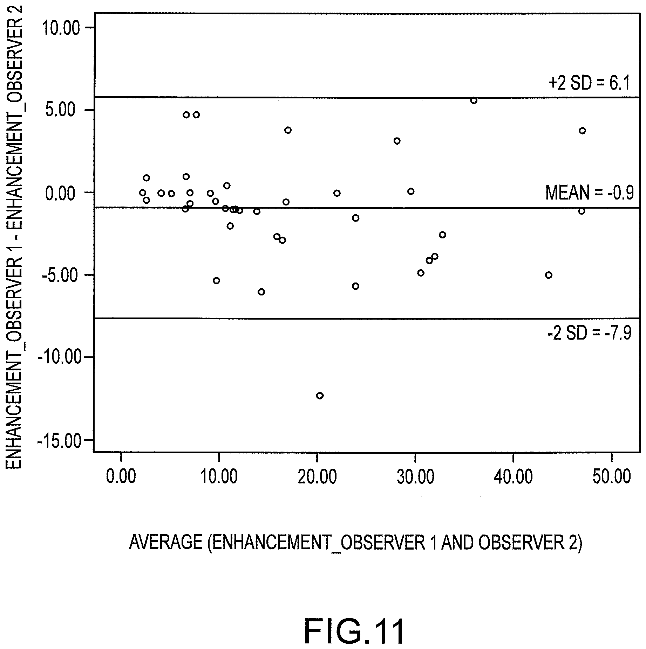

Figure 11 provides a Bland-Altman plot of inter-observer agreement of detected LA wall enhancement in 43 patients.

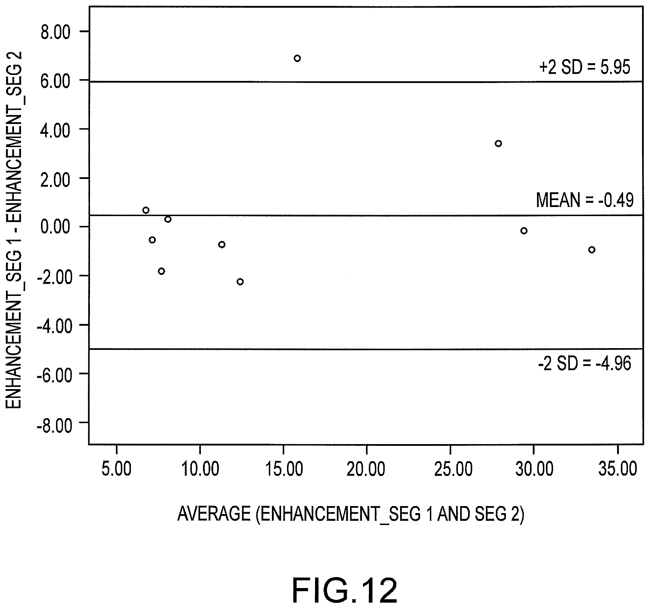

Figure 12 provides a Bland-Altman plot of inter-observer variability of fibrosis detection and LA volume segmentation in 10 patients.

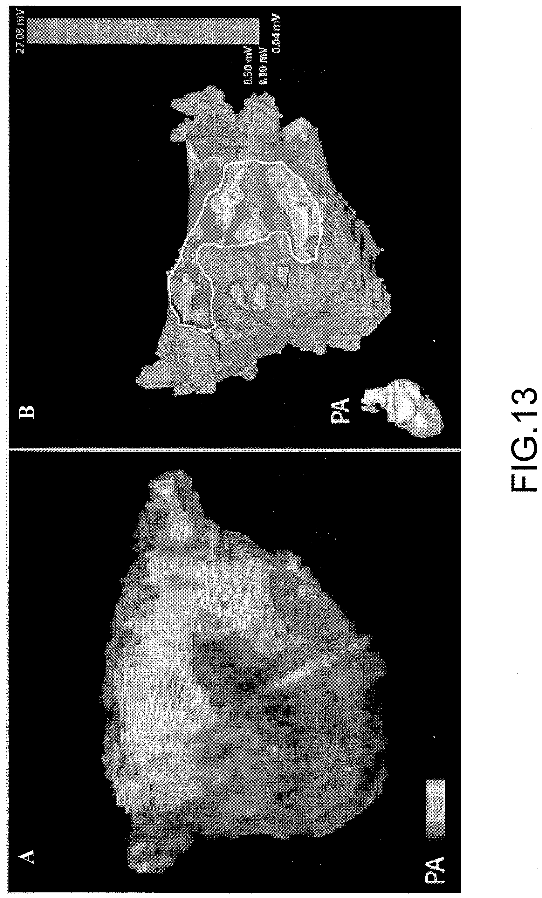

Figure 13A illustrates a two-dimensional DE-MRI slice from DE-MRI scanning of the LA wall tissue of a patient. There is no visible navigator artifact on the right side. Figure 13B illustrates an electroanatomical map of the LA wall tissue of the patient. A strong coincidence of localization exists between the enhanced tissue in the DE-MRI image and the low voltage tissue in the electroanatomical map.

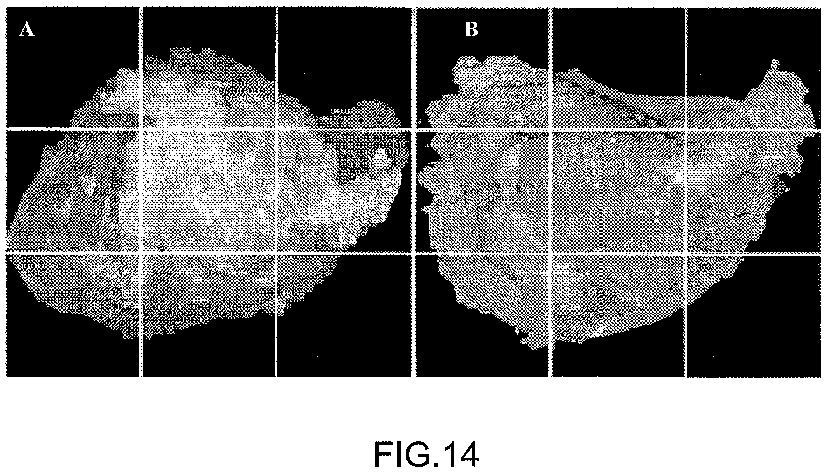

Figure 14 illustrates a posterior wall projection of a DE-MRI volume model (Figure 14A) and an electroanatomical map (Figure 14B) acquired with a CARTO system.

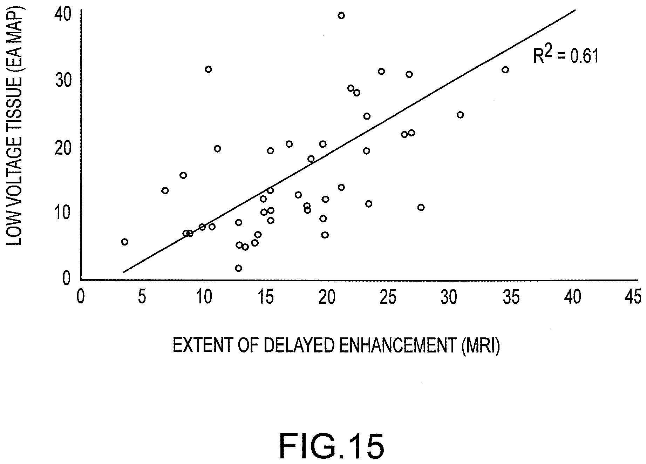

Figure 15 provides a pairwise analysis for the enhanced DE-MRI LA tissue and the electroanatomical map of low voltage LA tissue of Figure 14. A positive correlation of R² = 0.61 was noted.
The left panels of Figure 16 show DE-MRI models of LA wall slices at baseline (A) and 3 months after PVAI (B) on three dimensional navigated DE-MRI in 4 different patients. The right panels of Figure 16 show multiple views (posterior, right, left, and superior) of three-dimensional DE-MRI LA wall models, reconstructed from DE-MRI slice data from Patient #1 before and after PVAI. Post-PVAI hyperenhancement of LA wall is clearly seen (arrows) in regions subjected to RF ablation.

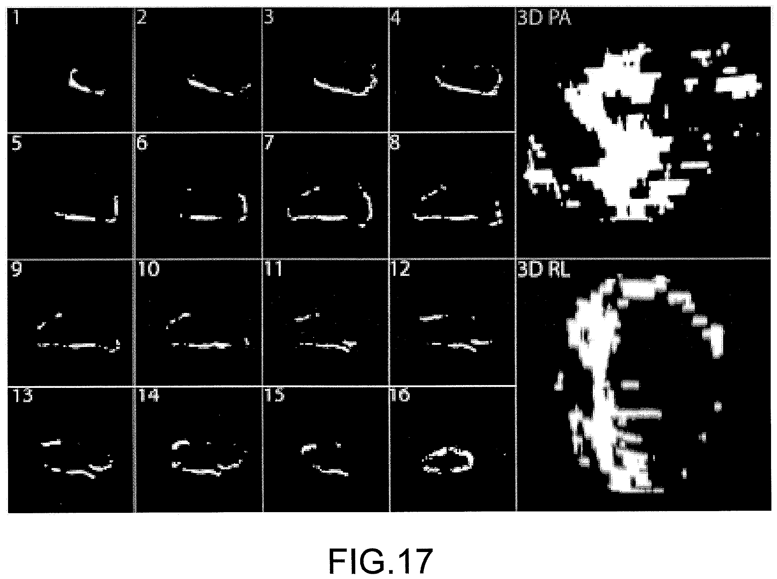

Figure 17 shows determination of left atrial wall injury using a threshold based on the normal wall regions. Figure 17, panels 1 to 16, show extent of the LA wall injury at 5 standard deviations in a subset of slices from the DE-MRI scanning of Patient #1. Three-dimensional reconstruction of the full data set is shown in the right panels (3DPA and 3DRL views). Using these methods, LA injury volume can be determined and calculated as a percentage of total LA wall volume.

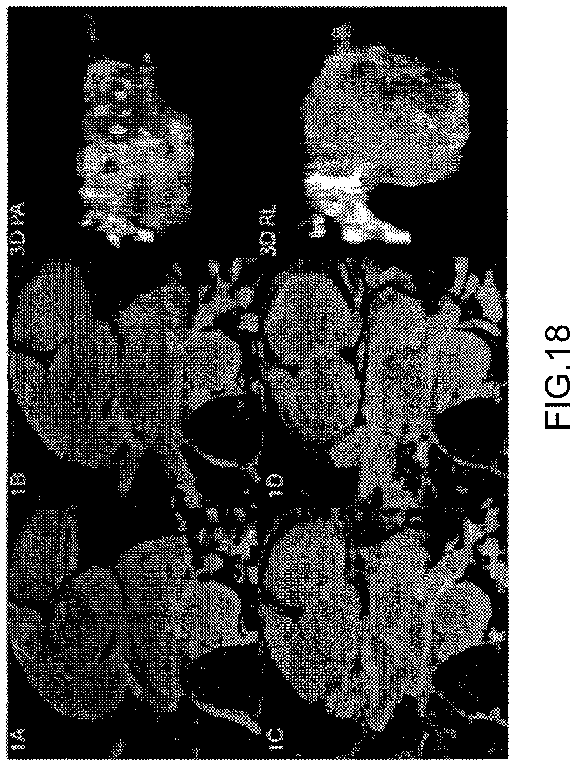

Figure 18, panels 1A to 1D, show 4 examples of two-dimensional DE-MRI slices of LA wall tissue from Patient #1 that show a close correlation of LA wall tissue injury, as determined by automated methods using a three standard deviation cutoff value. The right panels of Figure 18 show a three-dimensional overlay of full data sets (3DPA and 3DRL). LA injury mask (blue), as determined by automated methods, should substantially overlay hyperenhanced areas (white) of injured LA wall tissue, as determined in DE-MRI. Although the left pulmonary veins are white on MRI, this enhancement is attributable to navigator interference, not injured tissue. The pulmonary veins are shown to help with anatomical orientation, and are excluded from raw data used to produce injury mask by automated methods.

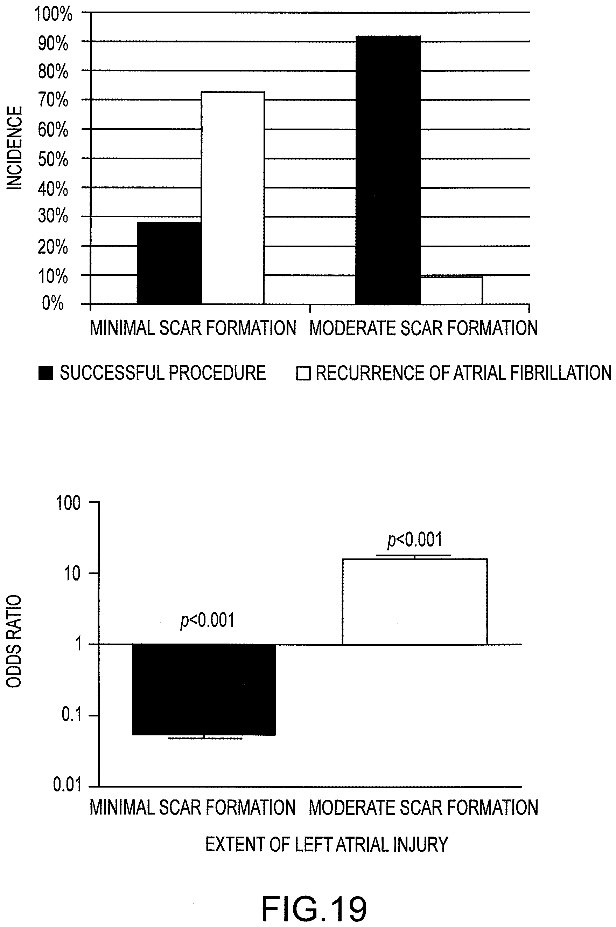

Figure 19 provides graphical representations of the association, a statistical significance thereof, between atrial fibrillation recurrences and clinical success according to LA wall injury following catheter-based PVAI. Patients with minimal scar formation at 3 months after the procedure (>13% of LA myocardial volume enhancement on DE-MRI) had low procedural success and a high recurrence of atrial fibrillation, whereas patients with moderate scar formation at 3 months had very high procedural success and a low recurrence of atrial fibrillation.

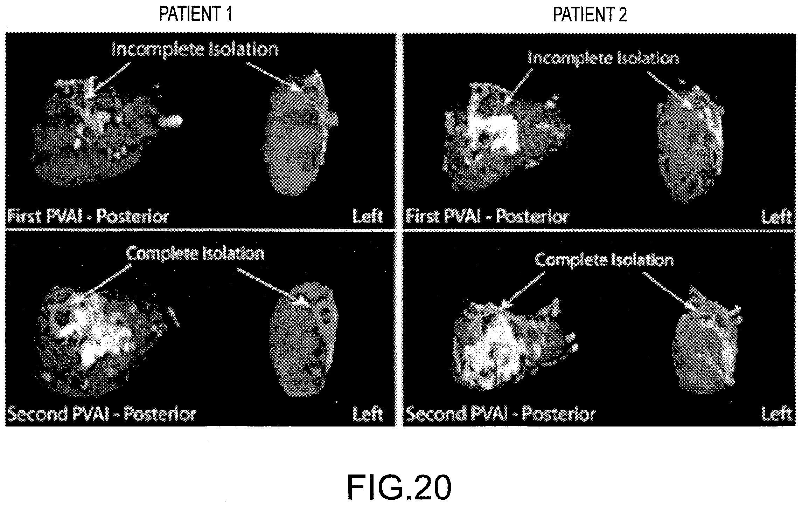

Figure 20 shows posterior and left lateral view DE-MRI models of LA wall tissues of two patients, three months after each patient had undergone a failed PVAI treatment. Incomplete scar formation near the antrum of the pulmonary veins appears in the DE-MRI models of both patients. The gap in RF lesions at the pulmonary vein antrum (purple) correlated with incomplete electrical isolation of the left superior pulmonary vein. Figure 20 also shows posterior and left lateral view DE-MRI models of LA wall tissues of the two patients 3 months after undergoing a repeat PVAI procedure. Complete scar formation (white/orange), which isolates the pulmonary veins, appears in the DE-MRI, and both patients were free of AF.

### Detailed Description of the Inventions

AF is associated with pathologies of the LA such as necrosis, fibrosis, scarring, reduced endocardial voltage, irregular cardiac rhythm, and combinations thereof. AF is often a progressive disease, which suggests a self perpetuating component to AF. Rapidly paced cardiac myocytes have been shown to release factors that induce a nearly four-fold increase in collagen-1 and fibronectin-1 in LA tissue, which suggests a link between the degree of LA tissue fibrosis and the severity of AF. In addition, animal studies have established an increased tendency for AF when LA tissue fibrosis is experimentally induced. Furthermore, certain studies have shown that fibrosis of LA tissues can lead to AF induction by burst or premature atrial pacing that would fail to result in AF in normal hearts having a low amount of LA tissue fibrosis.

Spatial distribution and degree of pathologic, low voltage LA tissue appears to influence fibrillatory dynamics such as the location and variability of wavefront breakthroughs. LA tissue pathologies and structural electrical remodeling in LA tissue associated with AF can promote formation of circuits needed for re-entry, resulting in atrial arrhythmia recurrence. Although the mechanisms underlying LA tissue pathologies in patients that have recurrent AF are complex and likely not fully delineated, changes in electrical activation in patients that have recurrent AF often manifest as a reduction in myocardial voltage and a reduction in the effective refractory period in heartbeat rhythm.

Determining the amount of unhealthy LA tissues in patients that have AF can be useful in selecting stage appropriate AF treatments, such as antiarrhythmic drug therapy, anticoagulant drug therapy, cardioversion, use of pacemakers, PVAI, and combinations thereof.

DE-MRI is an established method for visualizing tissue fibrosis, necrosis, and scarring in certain non-LA cardiac tissues. Contrast enhancement of unhealthy LA tissue achieved in DE-MRI results from more rapid washout kinetics of gadolinium from healthy cardiac tissues as compared to washout kinetics of gadolinium from unhealthy cardiac tissues, such as ischemic, apoptotic, necrotic, and/or fibrotic cardiac tissues. For instance, DE-MRI is commonly used to characterize the distribution of healthy and unhealthy tissue in the ventricular myocardium and to distinguish hibernating muscle from nonviable tissue in treating, e.g., myocardial ischemia and myocarditis. But the utility of DE-MRI in cardiac applications has previously been confined to the ventricle because it has not been possible to acquire DE-MRI scans of LA tissue having a spatial resolution sufficient to effectively map healthy and unhealthy regions of LA tissue. Accordingly, obtaining maps that illustrate healthy and unhealthy regions of LA tissue, prior to the present invention, required use of invasive procedures. Moreover, known, invasive LA mapping procedures, such as CARTO based electroanatomic (EA) mapping, generally have a high degree of spatial error, from 0.5 to 1.0 cm.

As used herein, "pathologic" LA tissue and "unhealthy" LA tissue include ischemic, apoptotic, necrotic, fibrotic, scar, low voltage, and/or aberrantly electrically remodeled LA tissue that may or may not result in, or from, irregular heart contraction rhythms associated with AF. In certain embodiments, determining, from LA tissue image data of a patient, a level of a parameter that is positively or negatively proportional to an amount of unhealthy or healthy tissue in a wall of the LA of the patient, respectively, can involve an estimation of the actual amount of unhealthy or healthy tissue present in the LA wall because, e.g., the precise proportionality between a level of the parameter and the unhealthy or healthy, respectively, among tissue in the LA wall of the patient can vary based on factors such as the age of the patient, the sex of the patient, the physical condition of the patient, and the method by which the LA tissue image data was acquired.

As used herein, AF treatment modalities include, e.g., antiarrhythmic drug therapy, anticoagulant drug therapy, cardioversion, use of pacemakers, PVAI, and combinations thereof, each representing a different modality. Any specific treatment regimen or dose schedule can be considered a different modality.

In certain embodiments, the acquiring of image data of a patient's LA wall tissue by detecting a signal of an agent substantially localized at the unhealthy LA tissue comprises administering, to the patient, an amount of signal agent comprising at least one of a magnetic resonance contrast agent, a radioisotope, an antibody coupled to a radiopaque moiety, an antibody component coupled to a radiopaque moiety, an antibody coupled to a radioisotope, and an antibody component coupled to a radioisotope effective to result in exposing the LA wall tissue to a concentration of the signal agent in a range of from about 1 nanomolar to about 1 molar. In certain embodiments, such concentrations of signal agent include about 1 nanomolar, about 10 nanomolar, about 100 nanomolar, about 1 micromolar, about 10 micromolar, about 100 micromolar, about 1 millimolar, about 10 millimolar, about 100 millimolar, and about 1 molar.

In certain embodiments, doses of administered signal agent can range from about 1 nanogram signal agent per kilogram of the patient's body weight to about 1 g of signal agent per kilogram of the patient's body weight. In certain embodiments, doses of signal agent can be about 1 nanogram/kilogram, about 10 nanograms/kilogram, about 100 nanograms/kilogram, about 1 milligram/kilogram, about 10 milligrams/kilogram, and about 100 milligrams/kilogram, each of the patient's body weight.

In certain embodiments, administration of the signal agent to the patient can be achieved by at least one of injection, ingestion, inhalation, suppository, and gavage.

Certain embodiments of the present invention provide non-invasive methods of detecting healthy regions, unhealthy regions, and combinations thereof, of LA tissue in a mammal. Certain embodiments provide non-invasive methods of determining a propensity of a mammal that has a determined amount of unhealthy LA tissue to manifest improved LA health, function, etc. in response to a cardiac treatment. In certain embodiments, a non-invasive method of detecting pathologic regions of LA tissue comprises imaging with MR, DE-MR, positron emission tomography (PET), X-ray autoradiography, ultrasound, and combinations thereof. In certain embodiments, cardiac disease can comprise, for instance, AF, myocardial infarction, myocardial ischemia, cardiac embolism, and combinations thereof. In certain embodiments, a cardiac treatment can comprise antiarrhythmic drug therapy, anticoagulant drug therapy, cardioversion, use of pacemaker, ablative PVAI, and combinations thereof.

Certain embodiments involve use of noninvasive imaging to create a map of the LA wall, the map illustrating a distribution and/or degree of healthy and unhealthy tissues in the LA wall of a patient. As used herein, the term, "LA wall," refers to an area comprising tissue of the heart within or adjacent to an area delimited by the following cardiac structures: the coronary sinus, the pulmonary artery, the right pulmonary veins, and the left pulmonary veins.

In certain embodiments, cutoff points between mild amounts of unhealthy LA wall tissue, observed as, e.g., enhancement in DE-MRI of the invention, and moderate amounts of unhealthy LA wall tissue and between moderate amounts of unhealthy LA wall tissue and extensive amounts of unhealthy LA wall tissue identify groups of mammals having mild, moderate, and extensive amounts of unhealthy LA tissue and disparate likelihoods of experiencing a recurrence of a cardiac event, such as AF, after undergoing an AF treatment modality.

In certain embodiments, an amount of healthy or unhealthy LA wall tissue can be reported as the percentage of LA wall tissue relative to the whole of LA wall tissue or relative to a subregion of LA wall tissue, which can comprise a type of LA wall tissue (e.g., healthy or unhealthy tissue) or a location of the LA wall (e.g. a region adjacent a coronary structure). In certain embodiments, each of a healthy and an unhealthy percentage of LA wall tissue can comprise a ratio of areas of LA wall tissue. Such an area can substantially comprise a surface area of the LA wall or an interior area of the LA wall, and such an area of the LA wall can comprise a contiguous area of the LA wall or the sum of noncontiguous areas of the LA wall. In certain embodiments, each of a healthy and an unhealthy percentage of LA wall tissue can comprise a ratio of volumes of LA wall tissue. Such a volume of the LA wall can comprise a contiguous volume of the LA wall or the sum of noncontiguous volumes of the LA wall.

In certain embodiments, a cutoff point between mild and moderate amounts of unhealthy LA tissues can be in a range of from about 5% to about 25 %, including about 5%, about 7.5%, about 10%, about 12.5%, about 15%, about 17.5%, about 20%, about 22.5%, and about 25%. In certain embodiments, a cutoff point between moderate and extensive amounts of unhealthy LA wall tissue can be in a range of from about 25% to about 50%, including about 25%, about 27.5%, about 30%, about 32.5%, about 35%, about 37.5%, about 40%, about 42.5%, about 45%, about 47.5%, and about 50%.

Certain embodiments provide noninvasive methods of detecting and quantifying ablated (e.g., scarred) LA tissue following ablative PVAI treatment of patients having AF. Certain embodiments provide three-dimensional DE-MRI scanning sequences and processing methods by which LA wall scarring can be visualized at high resolution after radiofrequency ablation. Certain embodiments of the present invention provide non-invasive methods for obtaining high resolution images of ablated (e.g., scarred) LA tissue resulting from ablative PVAI AF treatment using two-dimensional or three-dimensional DE-MRI scanning and processing methods. Such DE-MRI visualizations can indicate the likelihood of a positive or negative outcome for a patient that has undergone an ablative PVAI AF treatment. In certain embodiments, such DE-MRI visualizations that indicate a likelihood of a negative outcome for a patient's ablative PVAI AF treatment further indicate a likelihood of a positive or negative outcome for a potential repeat ablative PVAI AF treatment.

Certain embodiments provide noninvasive methods of detecting and quantifying ablated (e.g., scarred) esophageal tissue following ablative PVAI treatment of patients. Certain embodiments provide three-dimensional DE-MRI scanning sequences and processing methods by which esophageal scarring can be visualized at high resolution after radiofrequency ablation. Certain embodiments of the present invention provide non-invasive methods for obtaining high resolution images of ablated (e.g., scarred) esophageal tissue resulting from ablative PVAI AF treatment using two-dimensional or three-dimensional DE-MRI scanning and processing methods.

### Examples

We developed DE-MRI methods that provide high resolution images illustrating amounts and distributions of healthy and unhealthy LA wall tissues in patients. We also developed methods for analyzing such images to provide a patient's likely outcome of ablative PVAI AF treatment, a negative outcome comprising a recurrence of AF following ablative PVAI AF treatment and a positive outcome comprising non-recurrence of AF on ablative PVAI AF treatment.

Patients that experienced recurrence of AF following ablative PVAI AF treatment exhibited a significantly greater amount of unhealthy LA tissue detected by DE-MRI as compared to patients that did not experience AF recurrence following ablative PVAI AF treatment. Patients having extensive amounts of unhealthy LA tissue presented exclusively with persistent forms of AF. Multivariate analysis demonstrated that the greatest degree of variance for ablative PVAI AF treatment outcome correlated to the degree of unhealthy LA tissue, observed as enhancement in the LA wall by DE-MRI (Table 3). These results indicate that extensive amounts of unhealthy LA wall tissue in a patient are predictive of a reduced likelihood of positive outcome of ablative PVAI AF treatment (i.e., an increased risk of AF recurrence following ablative PVAI AF treatment). DE-MRI detection of amounts and distributions of unhealthy LA tissues therefore allows for patient selection in ablative PVAI AF treatment and in repeat PVAI AF treatment.

Figure 7 shows data distributions inclusive of patients who, following ablative PVAI AF treatment, experienced AF recurrence and of patients who did not experience AF recurrence. Subsequent analysis of the sensitivity and specificity curves support two cutoffs dividing minimal, moderate, and extensive amount of unhealthy LA wall tissue: a lower cutoff (∼15% of unhealthy LA wall tissue) above which there is a rapid rise in the specificity of LA wall enhancement as a predictor for AF recurrence following ablative PVAI AF treatment without a substantial loss of sensitivity, and an upper cutoff (∼35% of unhealthy LA wall tissue) above which the specificity is nearly 100% for patients experiencing AF recurrence following ablative PVAI AF treatment.

Data presented herein demonstrate that not only the extent but also the location of unhealthy LA wall tissue, observed as enhancement in DE-MRI images, comprises an important predictor of positive or negative outcome for ablative PVAI AF treatment (Table 2). Patients that experienced a recurrence of AF following ablative PVAI AF treatment showed unhealthy LA wall tissues in all portions of the LA; whereas patients that did not experience a recurrence of AF following ablative PVAI AF treatment showed a distribution of unhealthy LA tissues primarily restricted to the posterior atrial wall and septum. In multivariate analysis, the extent of unhealthy LA wall tissues was more strongly associated with more persistent forms of atrial arrhythmia (Table 3).

### Example 1

### Atrial Fibrillation Patients

DE-MRI scans were performed on 81 patients referred to the University of Utah for ablative PVAI AF treatment. Table 1 lists demographics of the study patients.

Prior to ablative PVAI AF treatment, the 81 patients underwent MRI scanning to determine pulmonary vein anatomy, LA area, and LA wall thickness. LA appendage thrombus was ruled out via transesophageal echocardiogram (TEE). Left ventricular ejection fraction was obtained by biplane transthoracic echocardiogram. LA volume was determined by segmentation of blood volume on MRI angiography images.

Baseline AF type was categorized as either paroxysmal AF, which comprises an episode of AF that self terminated within seven days, or persistent AF, which comprises an episode of AF lasting longer than seven days. Patients that required either pharmacological treatment or medical or electrical cardioversion to end their AF were considered to have persistent AF. Data regarding patient response to antiarrhythmic drugs was assessed through retrospective chart review. Failure to respond to a given medication was defined as having an episode of breakthrough AF while on the antiarrhythmic drug.

Six healthy subjects without a history of AF or other cardiac arrhythmia also underwent DE-MRI acquisition in the same manner as patients presenting for ablative PVIA AF treatment. The healthy subjects included four men and two women having a mean age of 44.2 ± 21.2 years (range = 26 to 81 years). The healthy subjects did not undergo EA mapping.

### Delayed Enhancement MRI Acquisition

All patients and healthy subjects underwent MRI studies on a 1.5 Tesla Avanto clinical scanner (Siemens Medical Solutions, Erlangen, Germany) using a TIM phased-array receiver coil or 32 channel cardiac coil (Invivo Corp., Gainesville, FL). DE-MRI scans were acquired approximately 15 minutes after contrast agent injection (dose = 0.1 mmol per kilogram of body weight [Multihance, Braco Diagnostic Inc., Princeton, NJ]) using 3D inversion recovery prepared, respiration navigated, ECG-gated, gradient echo pulse sequence with fat saturation. Typical acquisition parameters were: free-breathing using navigator-gating, a transverse imaging volume with true voxel size=1.25x1.25x2.5 mm, flip angle = 22°, repetition time/echo time = 6.1/2.4 ms, inversion time (TI)=230-320 ms, parallel imaging using GRAPPA technique with R=2 and 42 reference lines. ECG gating was used to acquire a subset of phase encoding views during diastolic phase of the LA cardiac cycle. Typical scan time for the DE-MRI study was 5-9 minutes, depending on patient respiration and heart rate. 73/81 patients (90.1%) were in normal sinus rhythm during MRI acquisition. Patients in AF at the time of clinical presentation were cardioverted to restore normal sinus rhythm prior to MRI scanning.

In the healthy subject group, DE-MRI scans were acquired at 15 and again at 30 minutes following contrast injection. In a subset of four healthy subjects, a third DE-MRI scan was acquired 45 minutes following contrast injection. Image processing and quantification was performed in the same manner as described above for ablative PVAI AF treatment patients.

### Three Dimensional Electroanatomic Mapping

At the beginning of each ablative PVAI AF treatment, a detailed voltage map of the LA was obtained in all patients using the three-dimensional EA mapping system, CARTOMERGE (Biosense Webster, Diamond Bar, CA). The physician performing the ablative PVAI AF treatment was blinded to the DE-MRI results. EA measurement points were substantially evenly distributed throughout the LA wall, and bipolar voltage was measured from peak to peak with the signal filtered from 30 to 400 Hz. Mapping catheter-LA wall contact (Navistar-ThermoCool, Biosense Webster) was visually confirmed using fluoroscopy, intracardiac echocardiography, and a CARTO 3-D navigation system. 48/81 patients (59.3%) were in normal sinus rhythm during EA mapping, 27/81 patients (33.3%) were in AF during EA mapping, and 6/81 patients (7.4%) were in atrial flutter during EA mapping.

### Atrial Fibrillation Ablation Procedure

The ablation of ablative PVAI AF treatment was performed under intracardiac echocardiography (ICE) in all patients. A 10F, 64 element phased array ultrasound catheter (AcuNav, Siemens Medical Solutions USA, Inc) was used to visualize the interatrial septum and to guide the transseptal puncture. A circular mapping catheter (Lasso, Biosense Webster) and an ablation catheter were inserted into the LA. ICE was used to define the pulmonary vein ostia and their antra as well as the posterior LA wall. ICE was also used to position the circular mapping and ablation catheters. All patients underwent ablative PVAI AF treatment, defined as electrical disconnection of the PV antrum from the LA together with posterior LA wall and septal debulking.

Following the ablative PVAI AF treatment, all patients were observed on a telemetry unit for 24 hours. Following discharge, patients underwent 8 weeks of patient triggered and autodetected event monitoring. Patients activated the telemetry unit any time they felt symptoms, and were assessed at three months, six months, and one year after the ablative PVAI AF treatment. Patients continued anticoagulation therapy with warfarin (international normalized ratio of 2.0-3.0) for a minimum of three months following ablative PVAI AF treatment.

A positive outcome for ablative PVAI AF treatment was defined as freedom from AF, atrial tachycardia, and atrial flutter, while off of antiarrhythmic medications, three months following ablative PVAI. To confirm the absence of asymptomatic AF, all patients received a 48-hour Holter ECG recording within 24 hours following the procedure and an 8-day Holter ECG at 3, 6, and 12 month follow-ups. Recurrences of AF were therefore determined from patient reporting, event monitoring, Holter monitoring, and ECG data, and were defined as any symptomatic or asymptomatic detected episode of AF, atrial tachycardia, or atrial flutter lasting greater than 30 seconds.

### Analysis of DE-MRI Images

Three-dimensional visualization and segmentation of MRI scans were performed using OsiriX 2.7.5. The LA and pulmonary tree were manually segmented in all patients and visually verified in the image stack prior to rendering and visualization. Initial visualization used a MIP to assess contrast consistency followed by volume rendering using a ray cast engine with linear table opacity. A color look-up table mask was applied to the rendered images for improved differentiation of enhanced and non-enhanced tissue.

In all images, the epicardial and endocardial borders were manually contoured using image display and analysis software written in MATLAB (The Mathworks Inc., Natick, MA). The relative extent of unhealthy LA tissue was quantified within the LA wall using a threshold based algorithm. Patients were assigned to one of three groups based on the extent of unhealthy LA myocardium, observed as enhancement in DE-MRI images. Patients having 15% or less unhealthy LA tissue were defined as having a mild amount of unhealthy LA tissue. Patients having between 15% and 35% unhealthy LA tissue were defined as having a moderate amount of unhealthy LA tissue. Patients having 35% or more unhealthy LA tissue were defined as having an extensive amount of unhealthy LA tissue.

### Statistical Analysis

Normal continuous variables are presented as mean ± standard deviation. Continuous data were analyzed by one-way ANOVA to test for significant differences. Fisher's Exact Tests were used to test for differences in categorical measurements, and differences were considered significant when p < 0.05. Statistical analysis was performed using the SPSS 15.0 Statistical Package (SPSS Inc.; Chicago, IL) and Microsoft Excel 2007 (Microsoft Corporation; Redmond, WA).

To determine the relationship between unhealthy LA tissue, LA volume, preexisting medical history, and other demographic variables, binary logistic models were developed for three predictors of AF disease severity: baseline atrial fibrillation type, patient response to antiarrhythmic drug therapy (successful or at least one AAD failure), and patient response to ablative PVAI AF treatment (positive outcome or negative outcome). Variables of each patient's preexisting medical history included the presence/absence of a past myocardial infarction, coronary artery disease, coronary artery bypass surgery, valve surgery, history of smoking, hypertension, diabetes, or congestive heart failure. Demographic variables included age and gender. Baseline AF was entered into the predictive models for the patient's response to antiarrhythmic drug therapy and response to ablative PVAI AF treatment.

### Results

81 patients underwent ablative PVAI AF treatment. 43 patients were identified as having mild amounts of unhealthy LA tissue, 30 patients were identified as having moderate amounts of unhealthy LA tissue, and 8 patients were identified as having extensive amounts of unhealthy LA tissue. Table 1 lists patient demographics for the three patient groups and overall demographics for the clinical cohort. 22 patients were placed back on antiarrhythmic medications following the ablative PVAI AF treatment, and continued therapy for a total of eight weeks following the ablative PVAI AF treatment. Initial classification based on previous HRS/ACC/AHA guidelines identified 41 patients with paroxysmal AF, 32 patients with persistent AF, and 8 patients with permanent AF (permanent AF was defined as a continuous AF episode greater than 30 days in duration or a failure of an electrical cardioversion treatment).

Among the healthy subjects, the average amount of unhealthy LA tissue was 1.7% ± 0.3%. In the 43 patients classified as having a mild amount of unhealthy LA tissue, the average amount of unhealthy LA tissue was 8.0% ± 4.2%. In the 30 patients having a moderate amount of unhealthy LA tissue, the average amount of unhealthy LA tissue was 21.3% ± 5.8%. In the 8 patients having an extensive amount of unhealthy LA tissue, the average amount of unhealthy LA tissue was 50.1% ± 15.4%. All patients having an extensive amount of unhealthy LA tissue presented with persistent AF. While all groups had similar population characteristics at baseline, a statistically significant difference in left atrial volume was noted between patients having a mild or a moderate amount of unhealthy LA tissue and patients having an extensive amount of unhealthy LA tissue (p < 0.001).

### Delayed Enhancement MRI and Electroanatomic Maps

DE-MRI demonstrated detectable amounts of unhealthy LA tissue in all patients that presented for ablative PVAI AF treatment. Figure 1 shows the segmented MRI (Figure 1A) and the volume rendered color image (Figure 1B) for one such patient. Discrete patches of unhealthy LA tissue (green) can be seen and identified in the posterior LA wall (PA view) and the septum (RAO view) on both the MRI color image and the EA map. In comparison, healthy subjects showed little to no unhealthy LA tissue.

Figure 2 shows DE-MRI images for two healthy subjects that lacked the type of unhealthy LA tissue present in patients having AF. Figure 3 shows three-dimensional DE-MRI images in patients having a mild amount of unhealthy LA tissue. Healthy subjects largely presented free of unhealthy LA tissue. The minimal contrast is suggestive of largely viable and electrically normal atrial myocardium, a finding verified using the CartoXP EA mapping system (Figure 3D). A correlation between regions of unhealthy LA tissue having low voltage was observed in all patient DE-MRI images when compared with intracardiac voltage maps acquired with the EA mapping system (Figures 1 and 3-5).

In addition to the overall amount of unhealthy LA tissue, the distribution of unhealthy LA tissue differed among patients having a mild amount of unhealthy LA tissue, a moderate amount of unhealthy LA tissue, and an extensive amount of unhealthy LA tissue. Patients having mild and moderate amounts of unhealthy LA tissue, the unhealthy LA tissue was primarily localized to the LA posterior wall and interatrial septum (Figure 3-4). Among patients having an extensive amount of unhealthy LA tissue (Figure 5), the unhealthy LA tissue was distributed throughout all portions of the LA, including the posterior wall, inter-atrial septum, and anterior wall. This difference in distribution of unhealthy LA tissue among patients having no a moderate amount of unhealthy LA tissue and patients having an extensive amount of unhealthy LA tissue resulted in a substantial and statistically significant difference in the location of unhealthy LA tissues (p < 0.001).

### DE-MRI Quantification and Patient Outcome

Three months after ablative PVAI AF treatment, 56/81 patients (69.1%) remained free of AF recurrence while off anti-arrhythmic drugs. All 25 patients that experience AF recurrence were placed back on anti-arrhythmic drugs; and, of these patients, 21 (84%) responded favorably to antiarrhythmic drug therapy: i.e. maintained normal sinus rhythm.

Preablative PVAI AF treatment clinical classification failed to predict risk of recurrence: 12 patients (48%) were classified as having paroxysmal AF and 13 patients (52%) were classified as having persistent AF. A statistically significant difference in the amount of unhealthy LA tissue was observed in patients who experience AF recurrence following ablative PVAI AF treatment (25.9% ± 19.0%) in comparison to patients who did not (13.0% ± 9.3%, p < 0.001). Six patients (14.0%) having a mild amount of unhealthy LA tissue experience AF recurrence; whereas 13 patients (43.3%) having a moderate amount of unhealthy LA tissue and six patients (75%) having an extensive amount of unhealthy LA tissue experienced AF recurrence (p < 0.001). A statistically significant difference in the extent of unhealthy LA tissue, observed as enhancement in DE-MRI images, was also observed between patients who responded to medical therapy (13.3% ± 9.9%) versus patients who did not (21.2% ± 18.7%; p = 0.038).

Figure 6 shows the Kaplan-Meier analysis of patients in normal sinus rhythm following LA ablation grouped by amount of unhealthy LA tissue. In addition to the overall differences in AF recurrence, patients having a moderate amount of a unhealthy LA tissue and an extensive amount of unhealthy LA tissue often experienced AF recurrence at later time points than patients having a mild amount of unhealthy LA tissue. Six months postablative PVAI AF treatment, no recurrences were noted in patients having a mild amount of unhealthy LA tissue.

### Multivariate Model

Table 3 shows the results of the three multivariate models. Of all three outcome metrics, the amount of unhealthy LA tissue, reported as extent of LA wall enhancement, was the most statistically significant predictor. For baseline AF, both the extent of LA wall enhancement and LA volume remained as statistically significant predictors of persistent forms of the arrhythmia, though extent of LA wall enhancement had a greater adjusted odds ratio (Adj OR = 4.3; 95% CI = [1.50, 12.37]) than LA volume (Adj OR = 2.06, 95% CI = [1.18, 3.58]). This finding may reflect the fact that both variables likely have a degree of correlation with one another; they are both predictors of severe and persistent forms of the disease.

Extent of LA wall enhancement was the most statistically significant predictor of patient response to both drug and ablation therapies for AF. After controlling for the effect of LA wall enhancement in the drug therapy model, none of the other variables achieved statistical significance. In comparison, after controlling for the effect of LA wall enhancement in the response to ablation, smoking and a history of diabetes remained statistically significant predictors.

### Example 2

### Delayed Enhancement MRI Acquisition

Patients referred to the University of Utah for PVAI were included in this analysis. In all patients, a contrast enhanced 3D FLASH angiography sequence and a cine true-FISP sequence were used to define the anatomy of the LA and the pulmonary veins. To image healthy and unhealthy LA tissues, delayed enhancement MRI was acquired approximately 15 minutes after contrast agent injection using a 3D inversion recovery prepared, respiration navigated, ECG gated, gradient echo pulse sequence. Typical acquisition parameters included: free-breathing using a respiratory navigator with a 6 mm acceptance window, a transverse imaging volume with voxel size = 1.25 x 1.25 x 2.5 mm (which was then reconstructed to 0.625 x 0.625 x 1.25 for analysis), TR/TE = 6.3/2.3 ms, TI = 230-270 ms, flip angle = 22°, bandwidth = 220 Hz/pixel, 1 RR interval between inversion pulses, phase encoding in right-left direction, parallel imaging using the GRAPPA technique with R = 2 and 32 reference lines, partial Fourier acquisition with 0.875 factors in the phase-encoding direction and a 0.8 factors in the slice-encoding direction.

ECG gating was used to acquire a small subset of phase encoding views and during the diastolic phase of the left atrial cardiac cycle. The time interval between the R-peak of the ECG and the start of the data acquisition was defined by examining the cine images of the left atrium to determine the period of minimal left atrial motion. The typical value of the interval was 60% of the mean RR interval for patients in sinus rhythm and 50% of the mean RR for patients with non-regular heart rate. The respiratory navigator was used to acquire data during the end of the expiration phase of the respiratory cycle. To reduce the negative effect of respiration on image quality, the navigator was positioned on the right hemi-diaphragm. The acceptance window was set to ± 3 mm. Typical LA motion due to respiration is predominantly in the superior/inferior (S/I) direction. This motion has lower amplitude than the corresponding diaphragm motion. Typical LA motion amplitude in the S/I direction is about two times smaller than the diaphragm S/I displacement. Thus, data acquisition for the delayed enhancement pulse sequence was active only if the LA displacement was less than 1.5 mm from the baseline. The voxel size (spatial resolution) of our pulse sequence in the S/I direction was 2.5 mm. Therefore, data was only acquired if the LA displacement in the S/I direction was less than half of the voxel size in the same direction.

To resolve the effect of the LA motion due to cardiac activity on image quality and resolution, data was acquired only during the diastolic phase of the LA. Cine images of the LA were used to identify the time interval when the LA motion was minimal. The parameters of the delayed enhancement pulse sequence were adjusted so that the data acquisition occurred during this time interval. It was further restricted to approximately 120 ms per heartbeat.

Fat saturation was used to suppress fat signal. The TE of the scan was chosen such that the signal intensity of partial volume fat tissue voxels was reduced allowing improved definition of the left atrial wall boundary. The TI value for the DE-MRI scan was identified using a scout scan. Typical scan time for the DE-MRI study was between 5 and 9 minutes depending on the patient or healthy subject respiration and heart rate.

Many of the early patient scans included some high signal artifact induced by the respiratory navigator positioned on the right hemi-diaphragm. Figure 8 shows an example of such a scan, where it is possible to see navigator induced bright blood signal in right pulmonary veins, the most common location of the artifact. Despite the presence of navigator artifact, there is a strong qualitative relationship between the color DE-MRI image (Figure 8C) and the EA map acquired during the catheter study (Figure 8D). To remove the artifact, the complementary reinversion RF pulse was removed from the product implementation of the navigation scheme and navigation information was acquired following imaging data. The change preserves the inversion recovery magnetization preparation in the whole image volume and results in a more uniform blood signal in the pulmonary vein and left atrium. Figure 9 shows an example of a later scan without the navigator artifact.

### Analysis of Delayed Enhancement-MRI Images

The threshold for fibrosis identification was determined for each patient individually by using a dynamic threshold algorithm based partly on work in the left ventricle. Figure 10 provides an overview of data processing steps of the algorithm. First, slices from DE-MRI scans are windowed and cropped. The epicardial and endocardial borders are then manually traced to isolate the LA wall. The algorithm then automatically selects a threshold intensity which is likely to correspond to the enhanced/fibrotic voxels of the left atrium by estimating the mean value and the standard deviation of the "normal" tissue. "Normal" tissue is defined as the lower region of the pixel intensity histogram between 2% and 40% of the maximum intensity within the region of interest (e.g., the LA wall). The unhealthy LA tissue (e.g., enhanced/fibrotic) signal threshold was then calculated as two to four standard deviations above the mean of "normal" signal. These values cover from 95% to 99.994% of a Gaussian distribution. The threshold was determined on a slice-by-slice basis, and the region identified as fibrotic was then compared to the original DE-MRI slice for appropriateness. The most commonly used cutoff was three standard deviations.

The overall volume of the LA myocardium was calculated as the number of voxels within the endocardial and epicardial contours. The extent of enhancement was then calculated as the number of pixels identified as enhanced by the semi-automated algorithm over the volume of LA myocardium for the slice.

### Inter-observer Agreement

For interobserver agreement, observers 1 and 2 each analyzed a subset of 43 patients from the clinical cohort with high quality DE-MRI scans. Each observer was blinded to the results obtained by the other observer, and each observer independently analyzed the scans by following a set protocol. First, the endocardial contour was traced, avoiding the pulmonary veins. Second, the epicardial contour was traced. The data was then quantified using the semi-automated algorithm by a third individual according to the described methodology.

The limits of agreement were calculated by Bland-Altman analysis. The difference between the amount of unhealthy LA tissues, observed as enhancement, detected from the segmentation of observer 1 and observer 2 was taken and plotted against the average amount of unhealthy LA tissue detected from the segmentations of observers 1 and 2. The average difference and 95% confidence interval (limits of agreement [LOA]) were calculated from these plots. Figure 11 shows the Bland-Altman plot for the interobserver agreement of amounts of unhealthy LA wall tissue detected in 43 patients. The average difference was -0.9% (LOA = - 7.9% to 6.1%).

### Intra-observer Agreement

The intraobserver agreement was calculated from a set of 10 patients which were segmented two times by the same observer. The average difference and LOA were calculated in a manner similar to that described for the interobserver agreement. The difference between segmentation 1 and segmentation 2 from the same observer was determined and plotted against the average detected enhancement. Figure 12 shows the Bland-Altman plot for the intra-observer agreement of detected LA wall enhancement in the 10 Patients. The average difference was 0.49% (LOA = -4.96% to 5.95%).

### Relationship between EA Maps and MRI Volume Models

### Qualitative Assessment

A trained expert qualitatively assessed and graded the relationship between EA maps and MRI color models. The relationship was rated on a 0 to 4 scale where 0 was coded as "No Relationship," 1 was coded as "Poor", 2 was graded as "Mediocre", 3 as "Good", and 4 as "Excellent." The average relationship between EA maps and MRI images was 3.65 ± 0.55 (range 2 to 4). Figure 13 shows an example of a strong qualitative MRI correlation with the corresponding EA map. The region of low voltage tissue has been highlighted in white on the electroanatomic map.

### Quantitative Assessment

54 patients with high quality CartoXP maps (defined as greater than 100 voltage points evenly spread throughout the atrium) were selected and scored by blinded reviewers. The same was done using three dimensionally rendered DE-MRI images. The LA was then subdivided into 18 specific regions (9 on the posterior wall and 9 on the anterior and septal wall). Figure 14 shows the posterior wall projections of a DE-MRI image and EA map for the same patient. In both images, the 9 box grid used for scoring has been applied.

Four blinded reviewers (two individuals experienced in cardiac MRI and two individuals experienced in ablative PVAI AF treatment) separately scored the DE-MRI models and EA maps. Two views, the posterior (PA) and right anterior oblique (RAO) which shows the anterior wall and septum, were chosen for scoring. The images were scored on a 0 to 3 scale. For MRI images, 0 was scored as no enhancement, 1 as mild enhancement, 2 as moderate, and 3 as extensive enhancement. For EA maps, 0 was considered healthy tissue (voltage > 1 mV, purple on EA maps), 1 was considered as mild illness (some abnormal tissue where voltage was > 0.1 mV and < 0.5 mV), 2 as moderate illness (presence of low voltage tissue [voltage > 0.1 mV and < 0.5 mV] as well as fibrotic scar [voltage < 0.1 mV]), and 3 as scar (voltage < 0.1 mV, red on EA maps). The overall score was a sum of all nine regions for both the posterior wall and the septum. The reviewer scores were then averaged to determine the score used in quantitative analysis. The relationship between EA maps and MRI images was then analyzed using pairwise regression. Figure 15 shows the analysis between the extent of enhancement on MRI and the amount of low voltage tissue. A positive correlation of R2 = 0.61 was determined.

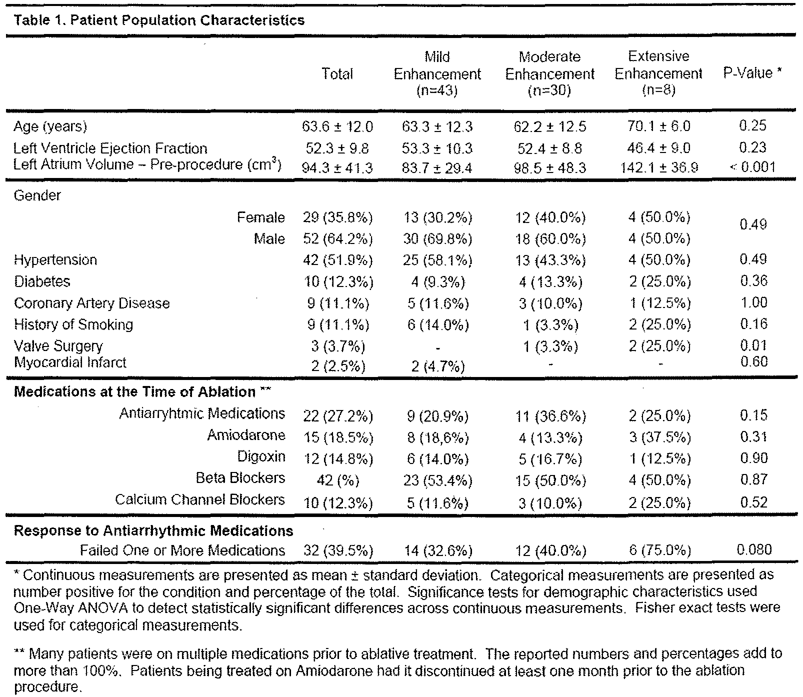

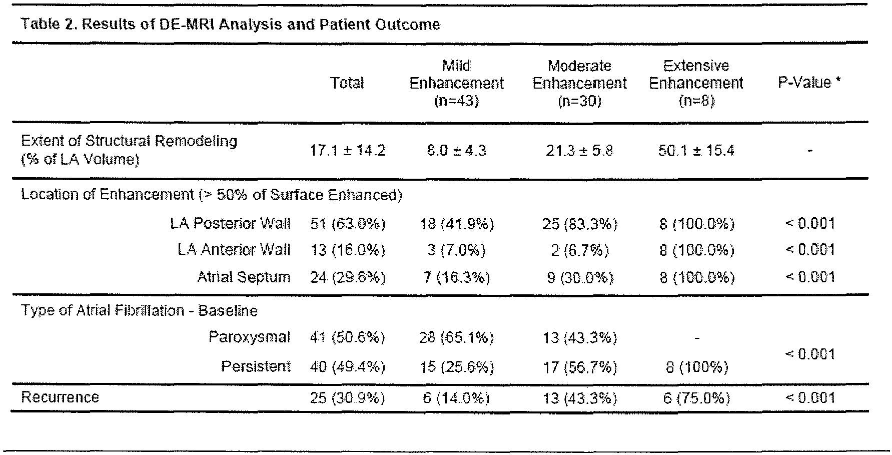

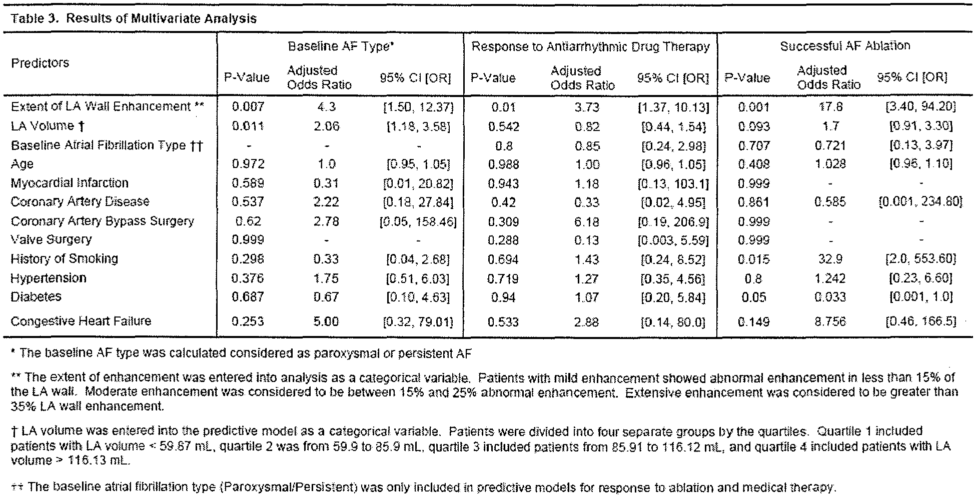

### Example 3

### Patients

After informed consent was obtained from 53 patients, each underwent, prior to receiving ablative PVAI AF treatment, MRI scanning to determine pulmonary vein location, esophagus location, LA anatomy, and health of LA wall tissues. MRI scanning of all patients was repeated 3 months after the ablative PVAI AF treatment to determine the outcome of the treatment. Following treatment, the patients continued warfarin anticoagulation therapy to maintain an international normalized ratio of 2.0 to 3.0 for a minimum of 3 months. Positive treatment outcome was defined as lack of AF recurrence while off antiarrhythmic medications. Negative treatment outcome was defined as AF recurrence, and AF recurrence was defined as a detected symptomatic or asymptomatic AF Episode lasting > 15 seconds.

AF event monitors were in place for a minimum of two months following ablative PVAI AF treatment, and patients were instructed to activate the monitors any time they felt AF symptomatic. To determine the presence or absence of asymptomatic AF, all patients received a 48 hour Holter ECG recording three months after receiving ablative PVAI AF treatment. AF recurrence was therefore determined from patient reporting, event monitoring, Holter monitoring, and ECG data.

53 patients underwent ablative PVAI AF treatment. Seven of the 53 patients were excluded from statistical data analysis because of inadequate MR images. The excluded patients included six with poor image quality on the preablative or postablative PVAI AF treatment DE-MRI scans and one who received an insufficient dose of intravenous contrast agent. Poor image quality typically resulted from patient motion during DE-MRI scanning and/or significant cardiac arrhythmia. In one case, navigator signal interference precluded accurate analysis. Results from the remaining 46 patients were included in the analyzed data. Table 4 shows patient demographics for patients having positive and negative outcomes in response to ablative PVAI AF treatment. Statistically significant differences were seen among the patient populations for age, left ventricle ejection fraction, LA area, and LA volume.

### Pulmonary Vein Isolation Procedure

The ablative PVAI AF treatment was performed under intracardiac echocardiogram guidance. A 10-F, 64-element, phased-array ultrasound catheter (AcuNav, Siemens, Mountain View, California) was used to visualize the interatrial septum and to guide transseptal puncture. A circular mapping catheter (Lasso, BioSense Webster, Diamond Bar, Colorado) and an ablation catheter were inserted into the LA. An intracardiac echocardiogram was used to identify PV ostia and their antra, and to help position the circular mapping catheter and ablation catheter at the desired sites. Temperature and power were set to 50°C and 50 W (pump flow rate at 30 ml/min), respectively. RF delivery was interrupted in the event of an increase in impedance or an increase in microbubble density during ablation. All patients underwent ablative PVAI AF treatment and LA posterior wall and septal debulking.

### Delayed Enhancement MRI Acquisition Sequences

24 to 72 hours prior to receiving ablative PVAI AF treatment, all patients underwent DE-MRI scanning on a 1.5-T Avanto clinical scanner (Siemens Medical Solutions, Erlangen, Germany) using a phased-array receiver coil. The MRI protocol included sequences designed to identify LA and PV anatomy. The anatomy was evaluated using a contrast enhanced three-dimensional fast low angle shot (FLASH) sequence and cine true-fast imaging with a steady state precession sequence. Typical acquisition parameters for 3D FLASH scans were: breath-hold in expiration, a transverse (axial) imaging volume with voxel size = 1.25 X 1.25 X 2.5 mm, repetition time (TR) = 3.1 ms, echo time (TE) = 1.0 ms, and parallel imaging using a generalized autocalibrating partially parallel acquisition (GRAPPA) technique with reduction factor R = 2 and 32 reference lines, scan time = 14 s. The 3D FLASH scan was acquired twice: pre-contrast and during a first pass of contrast agent comprising intravenous injection of a dose of 0.1 mmol/kg body weight, 2 ml/s injection rate, followed by a 15-ml saline flush. Timing of the first pass scan was defined using a MRI fluoroscopic scan.

Complete MRI scan coverage of the LA was achieved with 16 to 22 transverse 2-dimensional slices acquired during retrospective ECG gated, cine pulse sequencing. All images were acquired during breath-hold in expiration (1 or 2 slices per breath-hold, depending on patient heart rate and tolerance to breath-holding), and the obtained images were used to evaluate LA morphology during the cardiac cycle. Typical scan parameters included: 6 mm slice thickness, no gap between slices, pixel size = 2.0 X 2.0 mm, TR/TE = 2.56/1.03 ms, GRAPPA with R = 2 and 44 reference lines, 15 views/segment.

DE-MRI scans were acquired 15 min after contrast agent injection using a 3D inversion recovery prepared, respiration-navigated, ECG gated, gradient echo pulse sequence. Typical acquisition parameters included: free breathing using navigator gating, a transverse imaging volume with voxel size = 1.25 X 1.25 X 2.5 mm (reconstructed to 0.625 X 0.625 X 1.25 mm), TR/TE = 6.3/2.3 ms, inversion time (TI) = 230 to 270 ms, and GRAPPA with R = 2 and 32 reference lines. ECG gating was used to acquire a small subset of phase encoding views used during diastolic phase of the LA cardiac cycle. A time interval between the R-peak of the ECG and the start of DE-MRI scan data acquisition was defined using the cine images of the LA. Fat saturation was used to suppress fat signal. The TE of the scan (2.3 ms) was chosen so that fat and water were out of phase and the signal intensity of partial volume fat-tissue voxels were reduced, which provided improved delineation of the LA wall boundary. A TI value for DE-MRI scans was identified using a scout scan. Typical scan time for the DE-MRI study was 5 to 10 min, depending on subject respiration and heart rate. If the first DE-MRI scan acquisition did not have an optimal TI or had substantial motion artifacts, the scan was repeated.

### Image Processing and Analysis

All MR images were evaluated and interpreted by two independent operators. Processing of DE-MRI digital imaging and communications in medicine (DICOM) formatted data sets was performed using OsiriX (open-source) for visualization, whereas quantification of images was performed using Matlab (Mathworks, Inc., Natick, Massachusetts). Data from three-dimensional DE-MRI scanning of LA tissue were evaluated slice by slice, using volume rendering tools. These images were segmented and rendered, which allowed for unique visualization of ablated LA tissue patterns resulting from ablative PVAI AF treatment using the entire data set and facilitated correlation with 3D CARTO images. Visualization was performed using smooth table opacity.

The extent of ablated (e.g., scarred) LA tissue resulting from ablative PVAI AF treatment was measured in patients using a threshold based ablation detection algorithm. In all DE-MRI model, the epicardial and endocardial borders were manually contoured using custom image display and analysis software written in MATLAB. Care was taken, in two-dimensional tracings of the endocardial and epicardial walls, to confine the imaged region of interest to LA wall tissues and to avoid the blood pool, particularly on the right side, where a navigator-induced artifact was present in some patient scans.

Healthy and unhealthy LA tissues were identified based on a bimodal distribution of pixel intensities of LA tissue image data. The first mode of lower pixel intensities identified healthy tissue. Unhealthy tissue was identified at 3 standard deviations above the normal tissue mean pixel intensity. Regions identified as ablated tissue were visualized independently to ensure accuracy of ablation induced lesion detection. Ablated LA tissue area for each slice was summed for the entire scan, and reported as a ratio of ablated tissue volume to total LA tissue volume. For selected patients with characteristic patterns of ablated LA tissue observed in the OsiriX 3D visualizations, image masks of ablated regions of LA tissue were reconstructed into three-dimensional volumes for comparison with the OsiriX visualizations. Operators were blinded during the analysis of all imaging and electrophysiology data.

### Statistical Methods

Normal continuous variables are presented as mean SD. Continuous data were analyzed by the Student t test to test for significant differences. Chisquare tests were used to test for differences in categorical measurements. Differences were considered significant at p < 0.05. Statistical analysis was performed using the SPSS 15.0 statistical package (SPSS Inc., Chicago, Illinois).

### DE-MRI Visualization and Quantification

Hyperenhancement indicative of ablated tissue resulting from ablative PVAI AF treatment in DE-MRI images of the LA was not seen in patients prior to ablative PVAI AF treatment. Mild enhancement indicative of unhealthy LA tissue was seen in 4 patient DE-MRI scan images prior to ablative PVAI AF treatment (8.7%); however, it was clearly lower intensity than DE-MRI scans images following ablative PVAI AF treatment. In addition, such pretreatment enhancement in LA tissues did not meet the threshold for hyperenhancement determined by our quantification algorithm. Clear contrast enhancement was seen, for all 46 patients, in DE-MRI images following ablative PVAI AF treatment, most commonly in the posterior LA wall, interatrial septum, and areas surrounding the PVs (Figure 16).

Two experienced, independent operators evaluated the presence or absence of contrast enhancement on DE-MRI with agreement in all cases. Artificial signal enhancement in DE-MRI scan images occurred within the right PVs for some patients, likely as a result of the navigator RF pulse located over the right hemidiaphragm, and did not reflect unhealthy or ablated LA tissue. This navigator-induced artifact was identifiable by its location and intensity. Modifications of the pulse sequence resulted in a complete removal of navigator interference (data not shown).

Figure 16 shows MRI slices for 4 separate patients prior to and three months following ablative PVAI AF treatment. Ablative injury to the LA wall resulting from ablative PVAI AF treatment is largely localized to the posterior LA wall, PV ostia, and interatrial septum., but the degree of injury varied among patients. The anterior LA wall was consistently spared and free of ablated tissue in all patients, which is consistent with current strategies for ablative PVAI AF treatments. Figure 16 also shows exemplary 3D visualization of the LA wall of a patient before and after ablative PVAI AF treatment in four different views: posterior, right, left, and superior.

Figure 17 shows ablated LA tissue detection using a semiautomated computer algorithm. When ablated tissue, as identified by the computer algorithm, is overlaid with a 3D visualization, there is a strong correlation between the observed injury patterns and the region identified as ablated tissue (e.g., scar tissue) by the algorithm. Figure 18 shows the overlay for a patient in 3D. An ablated LA tissue identified by the computer algorithm (blue) matches regions of hyperenhancement (white) in the DE-MRI visualization. Similar correlation between MRI visualization and algorithm detection were seen for all patients. This segmentation algorithm, in conjunction with the DE-MRI image data, allowed amounts of unhealthy (e.g., ablated) LA tissue to be quantified as a percentage of the total LA tissue volume.

### Quantification of LA Wall Injury and Patient Outcome

Three months after receiving ablative PVAI AF treatment, 35 of 46 patients (76.1%) remained free of AF recurrence. All patients that experienced AF recurrence were placed back on antiarrhythmic drugs. A higher percentage of patients that had a negative outcome for ablative PVAI AF treatment, i.e., experienced AF recurrence, had persistent or permanent AF (8 of 11, 72.7%), as compared to patients that had a positive outcome for ablative PVAI AF treatment (16 of 35, 45.7%, p = 0.118).

A substantial difference was observed between the percentage of ablated LA wall tissue resulting from ablative PVAI AF treatment (as determined by DE-MRI and semiautomated quantification) between patients having positive and negative ablative PVAI AF treatment outcome (Figure 19). In patients having positive outcomes, the average amount of ablated LA tissue resulting from ablative PVAI AF treatment was 19.3 +/- 6.7%; whereas, in patients having negative outcomes, the average amount of unhealthy LA tissue resulting from ablative PVAI AF treatment was 12.4 +/ 5.7% (p = 0.004).

The strong correlation between average amount of ablated LA wall tissue resulting from ablative PVAI AF treatment and treatment outcome persisted when stratifying patients by the first and second quartiles. Using the first quartile (13% ablated LA tissue resulting from ablative PVAI AF treatment), patients with large ablated regions were 18.5X less likely to experience recurrence of AF (odds ratio [OR]: 18.5, 95% confidence interval [CI]: 1.27 to 268, p = 0.032). After controlling for age, gender, ablation time, and type of AF, relatively large areas of ablated LA tissue strongly predicted the absence of AF recurrence (adjusted OR: 83.7, 95% CI: 2.013 to 3,481.1, p = 0.022). Using the second quartile (median) as the cutoff for large ablated areas, the protective association between large ablated areas and recurrences was smaller but still persisted (p equal 0.045).

### LA Tissue Ablation Patterns in DE-MRI

Visualization of the pulmonary veins and LA tissue using 3D image processing allows for the pattern of ablated LA tissue to be assessed and subsequent isolation procedures to be planned. Figure 20 shows images of DE-MRI scans of two patients acquired three months after an ablative PVAI AF treatment having a negative outcome. These patients elected to undergo a second ablation procedure, and had a second DE-MRI scan acquired after that procedure. Three-dimensional segmentation of the LA was performed according to methods of the present invention. Incomplete scar formation can be seen near the antrum of the pulmonary veins after the failed ablative PVAI AF treatment. This gap in RF induced ablated areas at the PV antrum (purple) correlated with incomplete electrical isolation of the left superior vein (as determined by electrophysiology study at the time of the second procedure).

After the second ablative PVAI AF treatment, the DE-MRI shows complete scar formation around the ostia of the left superior vein (Figures 16C, 16D, 17C, 17D, and 20) in both patients. Three months after the second treatment, both patients were free of AF (as determined by 8-day Holter recordings and patient self-report). In such an application, 3D processing provides an advantage over traditional 2D visualization because it provides for the termination of spatial relationships and complex geometry of LA tissues and improved procedure planning and a lower recurrence rate of AF.

### LA Wall Injury and MRI Predicted Procedural Outcome

Although all patients in this study had detectable amounts of ablated LA tissues resulting from PVAI AF treatment three months after the treatment, the extent of ablative tissue varied significantly. When we applied our automated algorithm to quantify such ablated LA tissue, the degree of ablated LA tissue resulting from PVAI AF treatment was significantly different between patients having positive and negative outcomes (Table 5). After controlling for patient age, gender, AF phenotype, LA size, and LA volume, patients with ablative tissue ratios >13% are 18.5 times more likely to have a positive outcome (OR: 18.5, 95% CI: 1.27 to 268, p = 0.032). These data indicate that degree of the ablated LA tissue predicts ablative PVAI AF treatment success. The overall degree of ablated LA tissue therefore likely has important implications to the lesion type and subsequent interruption of PV to LA electrical conduction. Interruption of PV to LA conduction has been an important component of achieving positive outcome in ablative PVAI AF treatment. Closing conduction gaps in repeat ablative PVAI AF treatments frequently can result in positive treatment outcomes. These data indicate that overall ablation lesion permanence and complete PV isolation amount to important ablative PVAI AF treatment goals.

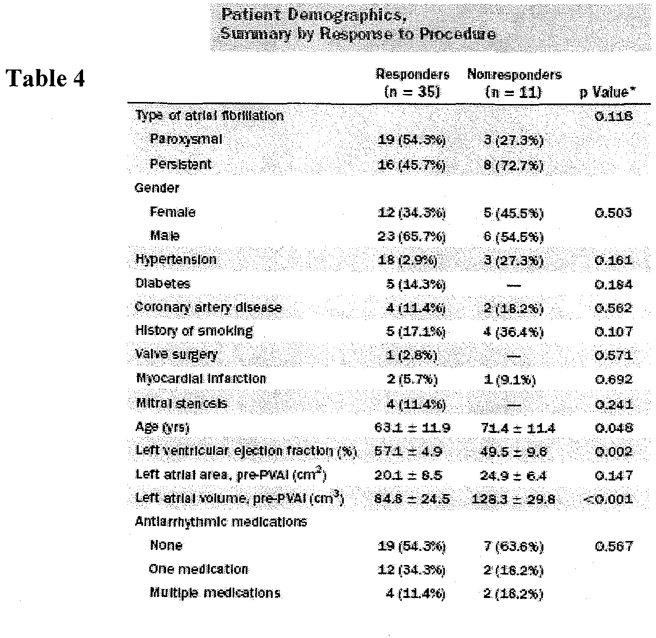

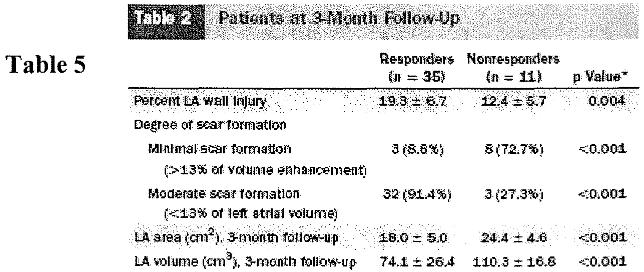

## Claims

1. A computer-implemented system for assessing a patient's risk for recurrent atrial fibrillation AF following treatment with an AF treatment modality, the system comprising:
a processing module that determines, from magnetic resonance imaging data of left atrium LA tissue of a patient before the treatment, a level of a parameter that is positively proportional or negatively proportional to an amount of unhealthy tissue in a wall of the LA of the patient, the parameter comprising an amount of delayed intravascular contrast enhancement by magnetic resonance imaging and
an output module, in communication with the processing module, that outputs a machine-readable indicator of a comparison between (i) the determined level and (ii) a first threshold level of the parameter, the first threshold level derived from LA tissue image data of at least one other patient, who experienced an AF recurrence after treatment with the AF treatment modality;
wherein when the level of the parameter is positively proportional to the amount of unhealthy tissue, levels of the parameter equal to or greater than the first threshold level are indicative of a significant risk of AF recurrence after treatment with the AF treatment modality;
wherein, when the level of the parameter is negatively proportional to the amount of unhealthy tissue, levels of the parameter equal to or less than the first threshold level are indicative of a significant risk of AF recurrence after treatment with the AF treatment modality.

2. The system of claim 1, wherein the machine-readable indicator is readable by at least one of a microprocessor, a computer, a storage medium, a server, a paper, a graphical user interface, a computer display, an LCD, an LED, or a television display.

3. The system of claim 1, wherein the output module outputs the machine-readable indicator to a receiving device that reads the machine-readable indicator.

4. The system of claim 3, further comprising the receiving device.

5. The system of claim 1, further comprising an imaging module that acquires the magnetic resonance imaging data of the LA tissue by imaging the patient.

6. A method of assessing a patient's risk for recurrent atrial fibrillation (AF) following treatment with an AF treatment modality, the method comprising:
using data obtained from delayed enhancement magnetic resonance imaging of the left atrium LA tissue of a patient before a treatment;
determining, by a processing module, from magnetic resonance imaging data of the left atrium LA tissue of a patient before the treatment, a level of a parameter that is positively proportional or negatively proportional to an amount of unhealthy tissue in a wall of the LA of the patient the parameter comprising an amount of delayed intravascular contrast enhancement by resonance imaging; and
outputting, to an output device, a machine-readable indicator of a comparison between (i) the determined level and (ii) a first threshold level of the parameter, the first threshold level derived from LA tissue image data of at least one other patient, who experienced an AF recurrence after treatment with the AF treatment modality;
wherein when the level of the parameter is positively proportional to the amount of unhealthy tissue, levels of the parameter equal to or greater than the first threshold level are indicative of a significant risk of AF recurrence after treatment with the AF treatment modality;
wherein, when the level of the parameter is negatively proportional to the amount of unhealthy tissue, levels of the parameter equal to or less than the first threshold level are indicative of a significant risk of AF recurrence after treatment with the AF treatment modality.

7. The method of claim 6, wherein the unhealthy tissue present in the LA wall comprises at least one of a fibrotic tissue, a necrotic tissue, a tissue comprising apoptotic cells, a scar tissue, a tissue having impaired electrical conduction, or an aberrantly electrically remodeled tissue.

8. The method of claim 6, wherein the AF treatment modality comprises tissue ablation.

9. The method of claim 8, wherein the ablation comprises:
at least one of radiofrequency ablation, thermal ablation, laser ablation, surgical ablation, or cryoablation; or pulmonary vein antrum isolation.

10. The method of claim 6, wherein the level of the parameter comprises a proportion of fibrotic LA wall tissue relative to a total amount of the LA wall tissue.

11. The method of claim 10, wherein the proportion of fibrotic LA wall tissue relative to a total amount of LA wall tissue comprises a ratio of (i) an imaged volume of fibrotic LA wall tissue to (ii) an imaged total volume of LA wall tissue.

12. The method of claim 10, wherein the proportion is between about 10% and about 20%, and the significant risk comprises a risk of recurrent AF of between about 15% and about 45% risk.

13. The method of claim 6, wherein the AF treatment modality comprises administration of a therapeutic substance.

14. The method of claim 13, wherein the therapeutic substance comprises an antiarrhythmic medication.

## Patentansprüche

1. Computerimplementiertes System zum Beurteilen des Risikos eines Patienten für wiederholt auftretendes Vorhofflimmern (AF) nach der Behandlung mit einer AF-Behandlungsmethode, wobei das System Folgendes umfasst:
ein Verarbeitungsmodul, das aus Magnetresonanzabbildungsdaten von Gewebe des linken Vorhofs (LA) eines Patienten vor der Behandlung einen Wert eines Parameters bestimmt, der zu einem Maß an ungesundem Gewebe in einer Wand des LAs des Patienten positiv proportional oder negativ proportional ist, wobei der Parameter ein Maß an verzögerter intravaskulärer Kontrastverstärkung durch
Magnetresonanzabbildung umfasst, und
ein Ausgabemodul in Verbindung mit dem Verarbeitungsmodul, das einen maschinenlesbaren Indikator eines Vergleichs zwischen (i) dem bestimmten Wert und (ii) einem ersten Schwellenwert des Parameters ausgibt, wobei der erste Schwellenwert aus LA-Gewebebilddaten mindestens eines anderen Patienten abgeleitet ist, der nach der Behandlung mit der AF-Behandlungsmethode ein Wiederauftreten von AF erfahren hat;
wobei, wenn der Wert des Parameters zu dem Maß an ungesundem Gewebe positiv proportional ist, Werte des Parameters gleich oder größer als der erste Schwellenwert ein signifikantes Risiko des Wiederauftretens von AF nach der Behandlung mit der AF-Behandlungsmethode angeben;
wobei, wenn der Wert des Parameters zu dem Maß an ungesundem Gewebe negativ proportional ist, Werte des Parameters gleich oder kleiner als der erste Schwellenwert ein signifikantes Risiko des Wiederauftretens von AF nach der Behandlung mit der AF-Behandlungsmethode angeben.

2. System nach Anspruch 1, wobei der maschinenlesbare Indikator von mindestens einem von einem Mikroprozessor, einem Computer, einem Speichermedium, einem Server, einem Papier, einer graphischen Benutzerschnittstelle, einer Computeranzeige, einem LCD, einer LED oder einer Fernsehanzeige lesbar ist.

3. System nach Anspruch 1, wobei das Ausgabemodul den maschinenlesbaren Indikator an eine Empfangsvorrichtung, die den maschinenlesbaren Indikator liest, ausgibt.

4. System nach Anspruch 3, ferner umfassend die Empfangsvorrichtung.

5. System nach Anspruch 1, ferner umfassend ein Abbildungsmodul, das die Magnetresonanzabbildungsdaten des LA-Gewebes durch das Abbilden des Patienten erfasst.

6. Verfahren zum Beurteilen des Risikos eines Patienten für wiederholt auftretendes Vorhofflimmern (AF) nach der Behandlung mit einer AF-Behandlungsmethode, wobei das Verfahren Folgendes umfasst:
Verwenden von Daten, die aus DE-MRI (Delayed Enhancement Magnetic Resonance Imaging) des Gewebes des linken LAs eines Patienten vor einer Behandlung erhalten werden;
Bestimmen, durch ein Verarbeitungsmodul, aus Magnetresonanzabbildungsdaten von Gewebe des linken LAs eines Patienten vor der Behandlung, eines Werts eines Parameters, der zu einem Maß an ungesundem Gewebe in einer Wand des LAs des Patienten positiv proportional oder negativ proportional ist, wobei der Parameter ein Maß an verzögerter intravaskulärer Kontrastverstärkung durch Resonanzabbildung umfasst; und
Ausgeben, an eine Ausgabevorrichtung, eines maschinenlesbaren Indikators eines Vergleichs zwischen (i) dem bestimmten Wert und (ii) einem ersten Schwellenwert des Parameters, wobei der erste Schwellenwert aus LA-Gewebebilddaten mindestens eines anderen Patienten abgeleitet ist, der nach der Behandlung mit der AF-Behandlungsmethode ein Wiederauftreten von AF erfahren hat;
wobei, wenn der Wert des Parameters zu dem Maß an ungesundem Gewebe positiv proportional ist, Werte des Parameters gleich oder größer als der erste Schwellenwert ein signifikantes Risiko des Wiederauftretens von AF nach der Behandlung mit der AF-Behandlungsmethode angeben;
wobei, wenn der Wert des Parameters zu dem Maß an ungesundem Gewebe negativ proportional ist, Werte des Parameters gleich oder kleiner als der erste Schwellenwert ein signifikantes Risiko des Wiederauftretens von AF nach der Behandlung mit der AF-Behandlungsmethode angeben.

7. Verfahren nach Anspruch 6, wobei das in der LA-Wand vorhandene ungesunde Gewebe mindestens eines von einem fibrotischen Gewebe, einem nekrotischen Gewebe, einem Gewebe, das apoptotische Zellen umfasst, einem Narbengewebe, einem Gewebe mit gestörter Erregungsleitung oder einem aberrant elektrisch remodellierten Gewebe umfasst.

8. Verfahren nach Anspruch 6, wobei die AF-Behandlungsmethode Gewebeablation umfasst.

9. Verfahren nach Anspruch 8, wobei die Ablation Folgendes umfasst:
mindestens eines von Radiofrequenzablation, thermischer Ablation, Laserablation, chirurgischer Ablation oder Kryoablation; oder Pulmonalvenenantrumisolation.

10. Verfahren nach Anspruch 6, wobei der Wert des Parameters einen Anteil an fibrotischem LA-Wandgewebe relativ zu einem Gesamtmaß des LA-Wandgewebes umfasst.

11. Verfahren nach Anspruch 10, wobei der Anteil an fibrotischem LA-Wandgewebe relativ zu einem Gesamtmaß an LA-Wandgewebes ein Verhältnis von (i) einem abgebildeten Volumen an fibrotischem LA-Wandgewebe zu (ii) einem abgebildeten Gesamtvolumen an LA-Wandgewebe umfasst.

12. Verfahren nach Anspruch 10, wobei der Anteil zwischen etwa 10 % und etwa 20 % beträgt und das signifikante Risiko ein Risiko an wiederholt auftretendem AF von zwischen etwa 15 % und etwa 45 % Risiko umfasst.

13. Verfahren nach Anspruch 6, wobei die AF-Behandlungsmethode die Verabreichung einer therapeutischen Substanz umfasst.

14. Verfahren nach Anspruch 13, wobei die therapeutische Substanz ein Antiarrhythmikum umfasst.

## Revendications

1. Système mis en oeuvre par ordinateur pour une évaluation du risque d'un patient d'une récurrence de fibrillation auriculaire AF suite à un traitement avec une modalité de traitement d'AF, le système comprenant :
un module de traitement qui détermine, à partir de données d'imagerie par résonance magnétique d'un tissu d'oreillette gauche LA d'un patient avant le traitement, un niveau d'un paramètre qui est positivement proportionnel ou négativement proportionnel à une quantité de tissu non sain dans une paroi de la LA du patient, le paramètre comprenant une quantité d'amélioration de contraste intravasculaire retardé par imagerie par résonance magnétique et
un module de sortie, en communication avec le module de traitement, qui délivre en sortie un indicateur lisible par machine d'une comparaison entre (i) le niveau déterminé et (ii) un premier niveau seuil du paramètre, le premier niveau seuil dérivé de données d'image de tissu de LA d'au moins un autre patient, qui a eu une récurrence d'AF après un traitement avec la modalité de traitement d'AF ;
dans lequel lorsque le niveau du paramètre est positivement proportionnel à la quantité de tissu non sain, des niveaux du paramètre égaux à ou supérieurs au premier niveau seuil indiquent un risque significatif de récurrence d'AF après un traitement avec la modalité de traitement d'AF ;
dans lequel, lorsque le niveau du paramètre est négativement proportionnel à la quantité de tissu non sain, des niveaux du paramètre sont égaux ou inférieurs au premier niveau seuil indiquent un risque significatif de récurrence d'AF après un traitement avec la modalité de traitement d'AF.

2. Système selon la revendication 1, dans lequel l'indicateur lisible par machine est lisible par au moins un d'un microprocesseur, d'un ordinateur, d'un support de stockage, d'un serveur, d'un papier, d'une interface utilisateur graphique, d'un affichage d'ordinateur, d'un LCD, d'une LED, ou d'un affichage de télévision.

3. Système selon la revendication 1, dans lequel le module de sortie délivre en sortie l'indicateur lisible par machine à un dispositif récepteur qui lit l'indicateur lisible par machine.

4. Système selon la revendication 3, comprenant en outre le dispositif récepteur.

5. Système selon la revendication 1, comprenant en outre un module d'imagerie qui acquiert des données d'imagerie par résonnance magnétique du tissu de LA par imagerie du patient.

6. Procédé d'évaluation d'un risque d'un patient de récurrence de fibrillation auriculaire (AF) suite à un traitement avec une modalité de traitement d'AF, le procédé comprenant :
une utilisation de données obtenues à partir d'une imagerie par résonnance magnétique à amélioration retardée du tissu d'oreillette gauche LA d'un patient avant un traitement ;
une détermination, par un module de traitement, à partir de données d'imagerie par résonnance magnétique du tissu d'oreillette gauche LA d'un patient avant le traitement, d'un niveau d'un paramètre qui est positivement proportionnel ou négativement proportionnel à une quantité de tissu non sain dans une paroi de la LA du patient, le paramètre comprenant une quantité d'amélioration de contraste intravasculaire retardé par imagerie par résonnance ; et
une délivrance en sortie, vers un dispositif de sortie, d'un indicateur lisible par machine d'une comparaison entre (i) le niveau déterminé et (ii) un premier niveau seuil du paramètre, le premier niveau seuil dérivé de données d'image de tissu de LA d'au moins un autre patient, qui a eu une récurrence d'AF après un traitement avec la modalité de traitement d'AF ;
dans lequel lorsque le niveau du paramètre est positivement proportionnel à la quantité de tissu non sain, des niveaux du paramètre égaux ou supérieurs au premier niveau seuil indiquent un risque significatif de récurrence d'AF après un traitement avec la modalité de traitement d'AF ;
dans lequel, lorsque le niveau du paramètre est négativement proportionnel à la quantité de tissu non sain, des niveaux du paramètre égaux ou inférieurs au premier niveau seuil indiquent un risque significatif de récurrence d'AF après un traitement avec la modalité de traitement d'AF.

7. Procédé selon la revendication 6, dans lequel le tissu non sain présent dans la paroi de LA comprend au moins un d'un tissu fibreux, d'un tissu nécrotique, d'un tissu comprenant des cellules apoptotiques, d'un tissu cicatriciel, d'un tissu présentant une conductivité électrique détériorée, ou d'un tissu remodelé électriquement de manière aberrante.

8. Procédé selon la revendication 6, dans lequel la modalité de traitement d'AF comprend une ablation de tissu.

9. Procédé selon la revendication 8, dans lequel l'ablation comprend :
au moins une d'une ablation par radiofréquence, d'une ablation thermique, d'une ablation laser, d'une ablation chirurgicale ou d'un cryo-ablation ; ou d'une isolation d'antrum de veine pulmonaire.

10. Procédé selon la revendication 6, dans lequel le niveau du paramètre comprend une proportion de tissu de paroi de LA fibreuse par rapport à une quantité totale du tissu de paroi de LA.

11. Procédé selon la revendication 10, dans lequel la proportion de tissu de paroi de LA fibreuse par rapport à une quantité totale de tissu de paroi de LA comprend un rapport (i) d'un volume imagé de tissu de paroi de LA fibreuse sur (ii) un volume total imagé de tissu de paroi de LA.

12. Procédé selon la revendication 10, dans lequel la proportion est entre environ 10 % et environ 20 %, et le risque significatif comprend un risque de récurrence d'AF d'entre environ 15 % et environ 45 % de risque.

13. Procédé selon la revendication 6, dans lequel la modalité de traitement d'AF comprend une administration d'une substance thérapeutique.

14. Procédé selon la revendication 13, dans lequel la substance thérapeutique comprend un médicament antiarythmique.
